(19) Europäisches Patentamt
European Patent Office
Office européen des brevets

(11) EP 4 667 436 A1

(12) **EUROPEAN PATENT APPLICATION**
published in accordance with Art. 153(4) EPC

(43) Date of publication:
**24.12.2025 Bulletin 2025/52**

(21) Application number: **24756894.2**

(22) Date of filing: **14.02.2024**

(51) International Patent Classification (IPC):
***C04B 24/02*** *(2006.01)* ***C04B 24/16*** *(2006.01)*
***C04B 24/26*** *(2006.01)* ***C04B 28/02*** *(2006.01)*
***G01N 13/02*** *(2006.01)*

(52) Cooperative Patent Classification (CPC):
**C04B 24/02; C04B 24/16; C04B 24/26; C04B 28/02; G01N 13/02**

(86) International application number:
**PCT/JP2024/004942**

(87) International publication number:
**WO 2024/172052 (22.08.2024 Gazette 2024/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **14.02.2023 JP 2023020543**

(71) Applicant: **Kao Corporation**
**Chuo-ku,**
**Tokyo 103-8210 (JP)**

(72) Inventors:
- **NAGOSHI, Yuto**
  **Wakayama-shi, Wakayama 640-8580 (JP)**
- **KAWAKAMI, Hiroyuki**
  **Wakayama-shi, Wakayama 640-8580 (JP)**
- **SHIMADA, Kohei**
  **Wakayama-shi, Wakayama 640-8580 (JP)**

(74) Representative: **Hoffmann Eitle**
**Patent- und Rechtsanwälte PartmbB**
**Arabellastraße 30**
**81925 München (DE)**

(54) **SURFACE AESTHETIC APPEARANCE IMPROVER FOR HYDRAULIC COMPOSITIONS**

(57) [Problem] To provide a surface aesthetics enhancing agent for hydraulic compositions capable of controlling the behavior of bubbles in a hydraulic composition that become a cause of bubble traces on the surface of a hardened product of the hydraulic composition, thereby enhancing the surface aesthetics of the hardened product.

[Solution] A surface aesthetics enhancing agent for hydraulic compositions, wherein the agent has a dynamic surface tension ($\sigma$1) of 55 mN/m or more at a bubble film lifetime of 10 ms and a dynamic surface tension ($\sigma$2) of 35 mN/m or less at a bubble film lifetime of 1000 ms as measured by the bubble pressure method (20°C).

[FIG. 2]

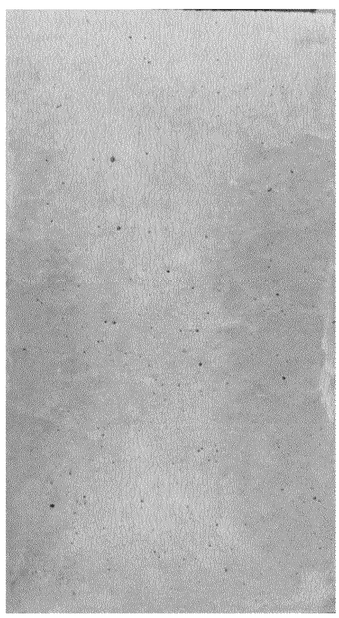



Processed by Luminess, 75001 PARIS (FR)

## Description

Field of the Invention

The present invention relates to a surfactant for use in surface aesthetics enhancing agents for hydraulic compositions, a surface aesthetics enhancing agent for hydraulic compositions, a hydraulic composition, a method for producing a hardened product of a hydraulic composition, a method for enhancing the surface aesthetics of a hardened product of a hydraulic composition, use of a surfactant as a surface aesthetics enhancing agent for hydraulic compositions, and a surface aesthetics enhancing kit.

Background of the Invention

Hydraulic compositions, typically concrete, can be produced, for example, by a step of filling a mold with an unhardened curable composition and thereafter hardening the composition by drying or chemical reactions to obtain a hardened product. One of the factors that influence the value of hardened products is surface aesthetics. This means literally the beauty of the surface of hardened products, and the superior the surface aesthetics is, the higher the evaluation of product value tends to be.

One cause of impaired surface aesthetics of hardened products may be bubble traces exposed on the surface of hardened products. An approach being taken against this issue is to add a repair step for covering bubble traces after hardening, but it is unpreferable from the viewpoint of costs, labor procurement, or the like.

JP-A 2019-196282 discloses a surface aesthetics enhancing agent for hydraulic compositions containing a specific fatty acid alkanolamide, a polycarboxylic acid-based dispersant, and a specific solvent. JP-A 2019-26506 discloses a resin emulsion for use in cement additives, the emulsion containing a specific emulsion resin, an aqueous solvent, and a nonionic emulsifier (a polyoxyethylene alkyl ether) used for emulsification polymerization of the resin, and discloses that the surface aesthetics of a hardened product of a cement composition can be enhanced by using a cement additive containing the resin emulsion.

Further, an approach also being taken is to apply a mold release agent to a mold used for hardening a hydraulic composition, thereby making bubbles rise more easily in the composition, and thus reducing bubbles forming at the interface between the composition and the mold before the composition is completely hardened. For example, JP-A 2018-130957 discloses a mold release agent containing a specific fatty acid alkanolamide.

Summary of the Invention

The problem to be solved by the present invention is to provide a surface aesthetics enhancing agent for hydraulic compositions capable of better controlling the behavior of bubbles in a hydraulic composition which become a cause of bubble traces on the surface of a hardened product of the hydraulic composition, thereby enhancing the surface aesthetics of the hardened product.

The present invention provides a surface aesthetics enhancing agent for hydraulic compositions containing a surfactant, wherein the surfactant has a dynamic surface tension ($\sigma$1) of 55 mN/m or more at a bubble film lifetime of 10 ms and a dynamic surface tension ($\sigma$2) of 35 mN/m or less at a bubble film lifetime of 1000 ms as measured by the bubble pressure method (20°C).

Further, the present invention provides a surfactant for use in surface aesthetics enhancing agents for hydraulic compositions, wherein an aqueous solution for measurement obtained by adding the surfactant at a concentration of 0.05 mass% to the bleeding water of the hydraulic composition described below has a dynamic surface tension ($\sigma$1) of 55 mN/m or more at a bubble film lifetime of 10 ms and a dynamic surface tension ($\sigma$2) of 35 mN/m or less at a bubble film lifetime of 1000 ms as measured by the bubble pressure method (20°C),

[bleeding water of hydraulic composition]

bleeding water of ordinary Portland cement is obtained by adding 4 kg of tap water and 1 kg of ordinary Portland cement to a 5-L polybottle, shaking the polybottle thoroughly, and then allowing the polybottle to stand in a 20°C environment for 24 hours, followed by filtering the supernatant in the polybottle using filter paper No. 5C.

Further, the present invention provides a hydraulic composition containing the aforementioned surface aesthetics enhancing agent for hydraulic compositions, a hydraulic powder, and water.

Further, the present invention provides a method for producing a hardened product of a hydraulic composition, the method including a step of mixing a surface aesthetics enhancing agent for hydraulic compositions, a hydraulic powder, and water to prepare the hydraulic composition, the agent having a dynamic surface tension ($\sigma$1) of 55 mN/m or more at a bubble film lifetime of 10 ms and a dynamic surface tension ($\sigma$2) of 35 mN/m or less at a bubble film lifetime of

1000 ms as measured by the bubble pressure method (20°C), a step of filling a mold with the prepared hydraulic composition and hardening the same, and a step of demolding the hardened hydraulic composition.

Further, the present invention provides a method for enhancing the surface aesthetics of a hardened product of a hydraulic composition, the method including adding a surfactant to the hydraulic composition containing a hydraulic powder and water, wherein the surfactant has a dynamic surface tension ($\sigma 1$) of 55 mN/m or more at a bubble film lifetime of 10 ms and a dynamic surface tension ($\sigma 2$) of 35 mN/m or less at a bubble film lifetime of 1000 ms as measured by the bubble pressure method (20°C).

Further, the present invention provides use of a surfactant as a surface aesthetics enhancing agent for hydraulic compositions, wherein an aqueous solution for measurement obtained by adding the surfactant at a concentration of 0.05 mass% to the aforementioned bleeding water of the hydraulic composition has a dynamic surface tension ($\sigma 1$) of 55 mN/m or more at a bubble film lifetime of 10 ms and a dynamic surface tension ($\sigma 2$) of 35 mN/m or less at a bubble film lifetime of 1000 ms as measured by the bubble pressure method (20°C).

Further, the present invention provides a surface aesthetics enhancing kit for hardened products of hydraulic compositions, the kit including, in combination, aqueous solution $\alpha$ containing the aforementioned surfactant for use in surface aesthetics enhancing agents for hydraulic compositions and aqueous solution $\beta$ containing the following cement dispersant,

[cement dispersant] a copolymer containing monomer (1b) represented by the following general formula (1b) and monomer (2b) represented by the following general formula (2b) as constituent monomers,

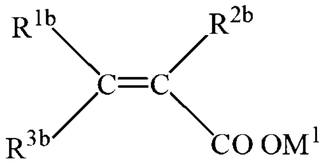

(1b)

wherein

$R^{1b}$, $R^{2b}$, and $R^{3b}$ may be the same or different and each represent a hydrogen atom, a methyl group, or $(CH_2)_rCOOM^2$, and $(CH_2)_rCOOM^2$ may form an anhydride with $COOM^1$ or another $(CH_2)_rCOOM^2$, and in that case, $M^1$ and $M^2$ in those groups are not present,

$M^1$ and $M^2$ may be the same or different and each represent a hydrogen atom, an alkali metal, an alkaline earth metal (1/2 atom), an ammonium group, an alkyl ammonium group, a substituted alkyl ammonium group, an alkyl group, a hydroalkyl group, or an alkenyl group, and

r represents a number of 0 or more and 2 or less, and

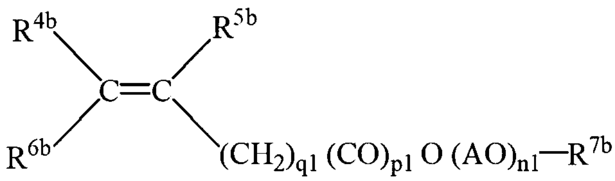

(2b)

wherein

$R^{4b}$ and $R^{5b}$ may be the same or different and each represent a hydrogen atom or a methyl group,

$R^{6b}$ is a hydrogen atom or $-COO(AO)_{n1}R^{7b}$,

$R^{7b}$ is a hydrogen atom or an alkyl group with 1 or more and 4 or less carbons,

AO is an oxyalkylene group with 2 or more and 4 or less carbons,

n1 is an average number of added moles of AO and a number of 4 or more and 200 or less,

q1 is a number of 0 or more and 2 or less, and

p1 represents 0 or 1.

Using the surface aesthetics enhancing agent for hydraulic compositions of the present invention makes it possible to control the behavior of bubbles in a hydraulic composition that become a cause of bubble traces on the surface of a hardened product of the hydraulic composition, thereby making it possible to enhance the surface aesthetics of the hardened product of the hydraulic composition.

Brief Description of the Drawings

[FIG. 1] FIG. 1 shows (a) a photograph of the surface of a hardened product of a hydraulic composition in comparative example 1, and (b) a photograph of the surface of a hardened product of a hydraulic composition in comparative example 2.

[FIG. 2] FIG. 2 shows a photograph of the surface of a hardened product of a hydraulic composition in example 2.

Embodiments of the Invention

The present inventors have found that a specific surfactant which satisfies the aforementioned dynamic surface tensions adsorbs to bubbles in a hydraulic composition, especially coarse bubbles of the order of several centimeters which stand out as bubble traces, and enables the bubbles to be pulled off from a mold. It has been found that this reduces bubbles between the hydraulic composition and the mold, resulting in reduced bubble traces on the surface of a hardened product of the hydraulic composition and enhanced aesthetics of the surface. Although being bound by a specific theory is undesirable, the reason why such an effect is produced is inferred to be as follows. Hydraulic compositions like concrete are, for example, filled into a metal mold, to which a mold release oil is applied, by being poured into the mold and provided with vibration, and hardened. Plasticity of concrete is gradually cancelled due to dilatancy during hardening, but once plasticity is cancelled, bubbles formed and adhering to the mold are pressed down by the concrete and thus cannot be pulled off by the action of a surfactant. Therefore, it is desirable to pull off the bubbles before a time period of about 1000 ms has elapsed until plasticity is cancelled. Here, it is known that most general-purpose mold release oils exhibit a dynamic surface tension of approximately 25 to 35 mN/m or the like at a gas-liquid interface. Therefore, it is inferred that such a surfactant as to exhibit a dynamic surface tension of 35 mN/m or less at a bubble film lifetime of 1000 ms at a gas-liquid interface can adsorb to and pull off, for example, bubbles emerging in the portion where the hydraulic composition and the mold come in contact via the mold release oil, especially coarse bubbles (of the order of several centimeters) large enough to stand out as bubble traces.

Further, on the other hand, a specific surfactant of the present invention, which has a dynamic surface tension of 55 mN/m or more at a bubble film lifetime of 10 ms, adsorbs to bubbles relatively more slowly (than other surfactants). Therefore, the surfactant is not trapped on the surface of fine bubbles (whose surface area is significantly large), and a sufficient amount of free surfactant remains in water and thus can adsorb to the surface of coarse bubbles, the original target. It seems that a specific surfactant of the present invention thus has a high modification effect on coarse bubbles.

It seems that, due to such a mechanism of action, when a hydraulic composition containing the surface aesthetics enhancing agent for hydraulic compositions of the present invention is filled into a mold to which a mold release agent is applied, bubbles emerging in the portion where the hydraulic composition and the mold release agent come in contact move to the inner side of the hydraulic composition one after another, resulting in reduced bubble traces on the surface and enhanced aesthetics of the surface.

<Surfactant for use in surface aesthetics enhancing agents for hydraulic compositions>

In an exemplary embodiment of the present invention, the present invention is a surfactant for use in surface aesthetics enhancing agents for hydraulic compositions [hereinafter referred to as "the surfactant of the present invention"], wherein an aqueous solution for measurement obtained by adding the surfactant at a concentration of 0.05 mass% to the bleeding water of the hydraulic composition described below has a dynamic surface tension ($\sigma$1) of 55 mN/m or more at a bubble film lifetime of 10 ms and a dynamic surface tension ($\sigma$2) of 35 mN/m or less at a bubble film lifetime of 1000 ms as measured by the bubble pressure method (20°C),

[bleeding water of hydraulic composition]

bleeding water of ordinary Portland cement is obtained by adding 4 kg of tap water and 1 kg of ordinary Portland cement to a 5-L polybottle, shaking the polybottle thoroughly, and then allowing the polybottle to stand in a 20°C environment for 24 hours, followed by filtering the supernatant in the polybottle using filter paper No. 5C. The manufacturer, production area, or brand name of the ordinary Portland cement is not particularly specified, and any ordinary Portland cement can be used.

The dynamic surface tension at the gas-liquid interface in the present invention is predominantly affected by the surfactant of the present invention and is hardly affected by cement particles, ionic species present in the bleeding water, and other optional components. The reason for this is uncertain, but is inferred to be as follows.

It is inferred that the surfactant of the present invention, which is slightly more hydrophobic, does not diffuse much in water and is mostly located to the gas-liquid interface. It is inferred that dissolved ionic species, cement particles, or soluble polymer compounds such as cement dispersants or the like thus do not affect it. On the other hand, it is inferred that

defoamers, air entraining agents, product stabilizing agents, and others are also located to the gas-liquid interface. However, it is inferred that, in such a range that they are generally used as optional components in surface aesthetics enhancing agents, the amount of these optional components located to the gas-liquid interface (also referred to as "located amount") is extremely small as compared to the amount of the surfactant of the present invention located to the gas-liquid interface (located amount) from the viewpoints of addition amounts and properties of activating agents, and it is inferred that they hardly affect it for the foregoing reasons.

In an exemplary embodiment of the present invention, the dynamic surface tension of the surfactant of the present invention is measured, for example, by BP100 manufactured by KRUSS Scientific, at 20°C, with a capillary diameter of 0.2 to 0.3 mm, and at a measurement time period of 10 ms to 10000 ms, using an aqueous solution for measurement prepared by adding the surfactant at a concentration of 0.05 mass% to the aforementioned bleeding water of the hydraulic composition.

In an exemplary embodiment of the present invention, the surfactant of the present invention has a dynamic surface tension ($\sigma1$) at a bubble film lifetime of 10 ms of 55 mN/m or more, and preferably 58 mN/m or more and more preferably 60 mN/m or more from the viewpoint of the effect of reducing the amount of bubble traces on the surface of hardened products of hydraulic compositions, and has a dynamic surface tension ($\sigma2$) at a bubble film lifetime of 1000 ms of 35 mN/m or less, and preferably 33 mN/m or less, more preferably 31 mN/n or less, and further preferably 29 mN/m or less from the viewpoint of the effect of reducing the amount of bubble traces on the surface of hardened products of hydraulic compositions, as measured by the bubble pressure method (20°C) using an aqueous solution for measurement obtained by adding the surfactant at a concentration of 0.05 mass% to the aforementioned bleeding water of the hydraulic composition.

Further, in another exemplary embodiment of the present invention, the surfactant of the present invention has a dynamic surface tension ($\sigma3$) at a bubble film lifetime of 10 ms of 55 mN/m or more, and preferably 58 mN/m or more and more preferably 60 mN/m or more from the viewpoint of the effect of reducing the amount of bubble traces on the surface of hardened products of hydraulic compositions, and has a dynamic surface tension ($\sigma4$) at a bubble film lifetime of 1000 ms of 35 mN/m or less, and preferably 33 mN/m or less, more preferably 31 mN/n or less, and further preferably 29 mN/m or less from the viewpoint of the effect of reducing the amount of bubble traces on the surface of hardened products of hydraulic compositions, and furthermore preferably 28 mN/m or less from the viewpoint of the effect of reducing the amount of bubble traces, as measured by the bubble pressure method (20°C) using an aqueous solution of the surfactant at a concentration of 0.3 mass%.

In an exemplary embodiment of the present invention, the surfactant of the present invention is a surfactant having a $\sigma1$ of 55 mN/m or more and a $\sigma2$ of 35 mN/m or less, and specifically, a nonionic surfactant having a $\sigma1$ of 55 mN/m or more and a $\sigma2$ of 35 mN/m or less is preferable, more specifically, one or more nonionic surfactants selected from a polyoxyalkylene alkyl ether, an alkyl alkanolamide, and a polyoxyethylene alkylamine having a $\sigma1$ of 55 mN/m or more and a $\sigma2$ of 35 mN/m or less are more preferable, and further specifically, a polyoxyalkylene alkyl ether having a $\sigma1$ of 55 mN/m or more and a $\sigma2$ of 35 mN/m or less is further preferable from the viewpoint of the effect of reducing the amount of bubble traces on the surface of hardened products of hydraulic compositions.

In an exemplary embodiment of the present invention, when the surfactant of the present invention is a nonionic surfactant having a $\sigma1$ of 55 mN/m or more and a $\sigma2$ of 35 mN/m or less, a polyoxyalkylene alkyl ether having an alkyl group with an average carbon number of preferably 9 or more and more preferably 10 or more, and preferably 12 or less and more preferably 11 or less can be used from the viewpoint of the effect of reducing the amount of bubble traces on the surface of hardened products of hydraulic compositions.

Note that, when two or more types of polyoxyalkylene alkyl ethers having alkyl groups with different carbon numbers are used, the above average carbon number of the alkyl group is a weight average carbon number calculated from the content ratios of all polyoxyalkylene ethers contained in the surfactant of the present invention and the carbon number of an alkyl group in each polyoxyalkylene alkyl ether.

In an exemplary embodiment of the present invention, when the surfactant of the present invention is a nonionic surfactant having a $\sigma1$ of 55 mN/m or more and a $\sigma2$ of 35 mN/m or less, a polyoxyalkylene alkyl ether in which the alkylene oxide is preferably ethylene oxide or propylene oxide and more preferably ethylene oxide can be used from the viewpoint of the effect of reducing the amount of bubble traces on the surface of hardened products of hydraulic compositions.

In an exemplary embodiment of the present invention, when the surfactant of the present invention is a polyoxyethylene alkyl ether having a $\sigma1$ of 55 mN/m or more and a $\sigma2$ of 35 mN/m or less, the average number of added moles of ethylene oxide is preferably 1 or more and more preferably 2 or more, and preferably 6 or less and more preferably 5 or less.

In an exemplary embodiment of the present invention, when the surfactant of the present invention is a polyoxypropylene alkyl ether having a $\sigma1$ of 55 mN/m or more and a $\sigma2$ of 35 mN/m or less, the average number of added moles of propylene oxide is preferably 0 or more, and preferably 6 or less and more preferably 4 or less from the viewpoint of the effect of reducing the amount of bubble traces on the surface of hardened products of hydraulic compositions.

Note that, for example, when two or more types of polyoxyethylene alkyl ethers having different carbon numbers of ethylene oxide are used, the aforementioned average number of added moles of the alkylene oxide is a weight average value from the content ratios of all polyoxyethylene alkyl ethers contained in the surfactant of the present invention and the average number of added moles of ethylene oxide in each polyoxyethylene alkyl ether.

In an exemplary embodiment of the present invention, when the surfactant of the present invention is a nonionic surfactant having a σ1 of 55 mN/m or more and a σ2 of 35 mN/m or less, a polyoxyethylene alkyl ether having an alkyl group with an average carbon number of preferably 9 or more and preferably 12 or less and an average number of added moles of ethylene oxide of preferably 1 or more and preferably 6 or less can be used from the viewpoint of the effect of reducing the amount of bubble traces on the surface of hardened products of hydraulic compositions.

Further, in another exemplary embodiment of the present invention, when the surfactant of the present invention is a polyoxyethylene alkyl ether having a σ1 of 55 mN/m or more and a σ2 of 35 mN/m or less, a polyoxyethylene alkyl ether having a number of added moles of oxyethylene groups of 0, in other words, a compound containing an alkyl alcohol having an alkyl group which is a raw material of the aforementioned polyoxyethylene alkyl ether can be used as the polyoxyethylene alkyl ether. In this case, the alkyl alcohol having an alkyl group is considered herein as part of the aforementioned polyoxyethylene alkyl ether.

When the surfactant of the present invention is a polyoxyethylene alkyl ether having a σ1 of 55 mN/m or more and a σ2 of 35 mN/m or less, a content of the alkyl alcohol having an alkyl group in the polyoxyethylene alkyl ether is preferably 1 mass% or more, more preferably 2 mass% or more, and further preferably 5 mass% or more, and preferably 50 mass% or less and more preferably 40 mass% or less.

In an exemplary embodiment of the present invention, when the surfactant of the present invention is a nonionic surfactant having a σ1 of 55 mN/m or more and a σ2 of 35 mN/m or less, the nonionic surfactant has an HLB of preferably 5 or more and more preferably 7 or more, and preferably 14 or less, more preferably 12 or less, and further preferably 11 or less from the viewpoint of the effect of reducing the amount of bubble traces on the surface of hardened products of hydraulic compositions.

Here, HLB is an abbreviation for Hydrophile Lipophile Balance, and is an indicator to know whether a compound is hydrophilic or lipophilic. General nonionic surfactants have a value of 0 to 20. A smaller HLB value indicates greater lipophilicity. HLB is, for example, calculated by Griffin's method.

The HLB by Griffin's method is calculated by the following formula:

HLB = (total molecular weight of the formula of hydrophilic portion / molecular weight) × 20

Further, in an exemplary embodiment of the present invention, when the surfactant of the present invention is a polyoxyalkylene alkyl ether and further a polyoxyethylene alkyl ether having a σ1 of 55 mN/m or more and a σ2 of 35 mN/m or less, the polyoxyalkylene alkyl ether and further the polyoxyethylene alkyl ether has an HLB of preferably 5 or more and more preferably 7 or more, and preferably 14 or less, more preferably 12 or less, and further preferably 11 or less from the viewpoint of the effect of reducing the amount of bubble traces on the surface of hardened products of hydraulic compositions.

In the case of a nonionic surfactant having a polyoxyalkylene group, the HLB is calculated by the following specific formula by Griffin's method:

HLB value = {(molecular weight of polyoxyalkylene group portion in nonionic surfactant) / (molecular weight of nonionic surfactant)} × 20

Note that the molecular weight of the polyoxyalkylene group portion in the nonionic surfactant is calculated by using the value of the average number of added moles of the polyoxyalkylene group.

In an exemplary embodiment of the present invention, the surfactant of the present invention is preferably one or more selected from polyoxyethylene (5) lauryl ether, polyoxyethylene (2) decyl ether, and polyoxyethylene (3) decyl ether, and more preferably one or more selected from polyoxyethylene (5) lauryl ether and polyoxyethylene (2) decyl ether from the viewpoint of the effect of reducing the amount of bubble traces on the surface of hardened products of hydraulic compositions.

In an exemplary embodiment of the present invention, the present invention provides a method for using a surfactant as a surface aesthetics enhancing agent for hydraulic compositions, wherein an aqueous solution for measurement obtained by adding the surfactant at a concentration of 0.05 mass% to the aforementioned bleeding water of the hydraulic composition has a dynamic surface tension (σ1) of 55 mN/m or more at a bubble film lifetime of 10 ms and a dynamic surface tension (σ2) of 35 mN/m or less at a bubble film lifetime of 1000 ms as measured by the bubble pressure method (20°C). The surfactant having the above σ1 and the above σ2 (for example, a nonionic surfactant, for example, a polyoxyalkylene alkyl ether, for example, a polyoxyethylene alkyl ether) can be the same as in the specific examples or

preferable aspects of the aforementioned surfactant of the present invention.

In an exemplary embodiment of the present invention, the present invention provides a method for selecting a surfactant applied to a surface aesthetics enhancing agent for hydraulic compositions, the method including selecting a surfactant having a dynamic surface tension (σ1) of 55 mN/m or more at a bubble film lifetime of 10 ms and a dynamic surface tension (σ2) of 35 mN/m or less at a bubble film lifetime of 1000 ms as measured by the bubble pressure method (20°C). The surfactant having the above σ1 and the above σ2 (for example, a nonionic surfactant, for example, a polyoxyalkylene alkyl ether, for example, a polyoxyethylene alkyl ether) can be the same as in the specific examples or preferable aspects of the aforementioned surfactant of the present invention.

Further, in another exemplary embodiment of the present invention, the present invention provides a method for selecting a surfactant applied to a surface aesthetics enhancing agent for hydraulic compositions, the method including selecting a surfactant (for example, a nonionic surfactant, for example, a polyoxyalkylene alkyl ether, for example, a polyoxyethylene alkyl ether), wherein an aqueous solution for measurement obtained by adding the surfactant at a concentration of 0.05 mass% to the aforementioned bleeding water of the hydraulic composition has a dynamic surface tension (σ1) of 55 mN/m or more at a bubble film lifetime of 10 ms and a dynamic surface tension (σ2) of 35 mN/m or less at a bubble film lifetime of 1000 ms as measured by the bubble pressure method (20°C). The surfactant having the above σ1 and the above σ2 (for example, a nonionic surfactant, for example, a polyoxyalkylene alkyl ether, for example, a polyoxyethylene alkyl ether) can be the same as in the specific examples or preferable aspects of the aforementioned surfactant of the present invention.

In an exemplary embodiment of the present invention, the surface aesthetics enhancing agent for hydraulic compositions described later can be prepared by using the surfactant of the present invention. In other words, in an exemplary embodiment of the present invention, the present invention provides a surface aesthetics enhancing agent for hydraulic compositions containing a surfactant [also referred to as "the surfactant of the present invention"], wherein the surfactant has a dynamic surface tension (σ1) of 55 mN/m or more at a bubble film lifetime of 10 ms and a dynamic surface tension (σ2) of 35 mN/m or less at a bubble film lifetime of 1000 ms as measured by the bubble pressure method (20°C).

<Surface aesthetics enhancing agent for hydraulic compositions>

In an exemplary embodiment of the present invention, the present invention provides a surface aesthetics enhancing agent for hydraulic compositions [hereinafter also referred to as "the aesthetics enhancing agent of the present invention"], wherein the agent has a dynamic surface tension (σ1) of 55 mN/m or more at a bubble film lifetime of 10 ms and a dynamic surface tension (σ2) of 35 mN/m or less at a bubble film lifetime of 1000 ms as measured by the bubble pressure method (20°C).

In the present invention, the aesthetics enhancing agent of the present invention refers to an agent for reducing bubble traces on the surface of a hardened product of a hydraulic composition to enhance the aesthetics of the surface of the hardened product of the hydraulic composition.

In an exemplary embodiment of the present invention, the aesthetics enhancing agent of the present invention has a dynamic surface tension (σ1) at a bubble film lifetime of 10 ms of 55 mN/m or more, and preferably 58 mN/m or more and more preferably 60 mN/m or more from the viewpoint of the effect of reducing the amount of bubble traces on the surface of hardened products of hydraulic compositions, and has a dynamic surface tension (σ2) at a bubble film lifetime of 1000 ms of 35 mN/m or less, and preferably 33 mN/m or less, more preferably 31 mN/n or less, and further preferably 29 mN/m or less from the viewpoint of the effect of reducing the amount of bubble traces on the surface of hardened products of hydraulic compositions, as measured by the bubble pressure method (20°C).

Further, in another exemplary embodiment of the present invention, the present invention provides a surface aesthetics enhancing agent for hydraulic compositions (hereinafter also referred to as "the aesthetics enhancing agent of the present invention") containing a surfactant, wherein an aqueous solution for measurement obtained by adding the surfactant at a concentration of 0.05 mass% to the aforementioned bleeding water of the hydraulic composition has a dynamic surface tension (σ1) of 55 mN/m or more at a bubble film lifetime of 10 ms and a dynamic surface tension (σ2) of 35 mN/m or less at a bubble film lifetime of 1000 ms as measured by the bubble pressure method (20°C).

When a reference is made to the aesthetics enhancing agent of the present invention, it includes the above two surface aesthetics enhancing agents for hydraulic compositions.

In an exemplary embodiment of the present invention, when the aesthetics enhancing agent of the present invention contains a surfactant, the aforementioned surfactant for use in surface aesthetics enhancing agents for hydraulic compositions of the present invention [hereinafter also referred to as "the surfactant of the present invention" and also referred to as component (A)] can be used as the surfactant.

Further, in an exemplary embodiment of the present invention, when the aesthetics enhancing agent of the present invention contains the surfactant of the present invention, the agent has a dynamic surface tension (σ1) at a bubble film lifetime of 10 ms of 55 mN/m or more, and preferably 58 mN/m or more and more preferably 60 mN/m or more from the viewpoint of the effect of reducing the amount of bubble traces on the surface of hardened products of hydraulic

compositions, and has a dynamic surface tension (σ2) at a bubble film lifetime of 1000 ms of 35 mN/m or less, and preferably 33 mN/m or less, more preferably 31 mN/n or less, and further preferably 29 mN/m or less from the viewpoint of the effect of reducing the amount of bubble traces on the surface of hardened products of hydraulic compositions, as measured by the bubble pressure method (20°C) using an aqueous solution for measurement obtained by adding the surfactant at a concentration of 0.05 mass% to the aforementioned bleeding water of the hydraulic composition.

In an exemplary embodiment of the present invention, when the agent contains the surfactant of the present invention, a content of the surfactant of the present invention is preferably 0.05 mass% or more, more preferably 0.5 mass% or more, and further preferably 2.0 mass% or more from the viewpoint of the effect of reducing the amount of bubble traces on the surface of hardened products of hydraulic compositions, and preferably 8.0 mass% or less and more preferably 4.0 mass% or less from the viewpoint of storage stability of the surface aesthetics enhancing agent.

In an exemplary embodiment of the present invention, when the aesthetics enhancing agent of the present invention contains a surfactant having a σ1 of 55 mN/m or more and a σ2 of 35 mN/m or less, a content of the surfactant having a σ1 of 55 mN/m or more and a σ2 of 35 mN/m or less is preferably 0.05 mass% or more, more preferably 0.5 mass% or more, and further preferably 2.0 mass% or more from the viewpoint of the effect of reducing the amount of bubble traces on the surface of hardened products of hydraulic compositions, and preferably 8.0 mass% or less and more preferably 4.0 mass% or less from the viewpoint of storage stability of the surface aesthetics enhancing agent.

In an exemplary embodiment of the present invention, when the aesthetics enhancing agent of the present invention contains a polyoxyethylene alkyl ether, a content of the polyoxyethylene alkyl ether is preferably 0.05 mass% or more, more preferably 0.5 mass% or more, and further preferably 2.0 mass% or more from the viewpoint of the effect of reducing the amount of bubble traces on the surface of hardened products of hydraulic compositions, and preferably 8.0 mass% or less and more preferably 4.0 mass% or less from the viewpoint of storage stability of the surface aesthetics enhancing agent.

In an exemplary embodiment of the present invention, the surface aesthetics enhancing agent for hydraulic compositions of the present invention is preferably in the form of a liquid from the viewpoint of handleability. Therefore, the surface aesthetics enhancing agent for hydraulic compositions of the present invention is preferably used in the form of a liquid such as a uniform solution or the like, and more preferably contains water and is further an aqueous solution. In other words, in an exemplary embodiment of the present invention, an aqueous solution containing the surfactant of the present invention can be used as the surface aesthetics enhancing agent for hydraulic compositions of the present invention.

In an exemplary embodiment of the present invention, while the surface aesthetics enhancing agent for hydraulic compositions of the present invention achieves excellent surface aesthetics enhancement even with a small amount of the surfactant of the present invention, it can contain a cement dispersant, a product stabilizing agent, a defoamer, or the like as a specific aspect.

In an exemplary embodiment of the present invention, the surface aesthetics enhancing agent for hydraulic compositions of the present invention can further contain (B) a cement dispersant [hereinafter also referred to as component (B)].

In an exemplary embodiment of the present invention, examples of component (B) of the present invention include one or more cement dispersants selected from a lignin sulfonic acid-based polymer, a polycarboxylic acid-based polymer, a naphthalene-based polymer, a melamine-based polymer, and a phenol-based polymer, and one or more cement dispersants selected from a lignin sulfonic acid-based polymer, a polycarboxylic acid-based polymer, and a naphthalene-based polymer are preferable from the viewpoint of dispersibility, and a polycarboxylic acid-based dispersant is more preferable from the viewpoint of flow retention of hydraulic compositions.

In an exemplary embodiment of the present invention, as the polycarboxylic acid-based polymer used as component (B) of the present invention, for example, a copolymer of a monoester of a polyalkylene glycol and (meth) acrylic acid and a carboxylic acid such as (meth)acrylic acid or the like (for example, a compound described in JP-A H8-12397 or the like), a copolymer of an unsaturated alcohol having a polyalkylene glycol and a carboxylic acid such as (meth)acrylic acid or the like, a copolymer of an unsaturated alcohol having a polyalkylene glycol and a dicarboxylic acid such as maleic acid or the like, and others can be used. Here, (meth)acrylic acid means a carboxylic acid selected from acrylic acid and methacrylic acid.

In an exemplary embodiment of the present invention, component (B) of the present invention is preferably a polycarboxylic acid-based dispersant which contains a copolymer containing monomer (1b) represented by the following general formula (1b) and monomer (2b) represented by the following general formula (2b) as constituent monomers, and more preferably a polycarboxylic acid-based dispersant which is the copolymer,

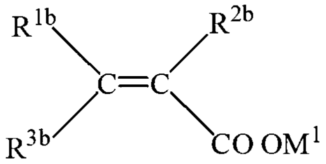

(1b)

wherein

$R^{1b}$, $R^{2b}$, and $R^{3b}$ may be the same or different and each represent a hydrogen atom, a methyl group, or $(CH_2)_rCOOM^2$, and $(CH_2)_rCOOM^2$ may form an anhydride with $COOM^1$ or another $(CH_2)_rCOOM^2$, and in that case, $M^1$ and $M^2$ in those groups are not present,

$M^1$ and $M^2$ may be the same or different and each represent a hydrogen atom, an alkali metal, an alkaline earth metal (1/2 atom), an ammonium group, an alkyl ammonium group, a substituted alkyl ammonium group, an alkyl group, a hydroalkyl group, or an alkenyl group, and

r represents a number of 0 or more and 2 or less, and

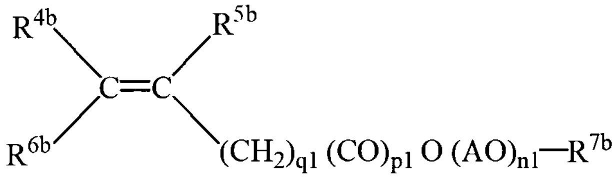

(2b)

wherein

$R^{4b}$ and $R^{5b}$ may be the same or different and each represent a hydrogen atom or a methyl group,

$R^{6b}$ is a hydrogen atom or $-COO(AO)_{n1}R^{7b}$,

$R^{7b}$ is a hydrogen atom or an alkyl group with 1 or more and 4 or less carbons,

AO is an alkyleneoxy group with 2 or more and 4 or less carbons,

n1 is an average number of added moles of AO and a number of 4 or more and 200 or less,

q1 is a number of 0 or more and 2 or less, and

p1 represents 0 or 1.

In the above general formula (1b), $R^{1b}$, $R^{2b}$, and $R^{3b}$ may be the same or different, and preferably, at least one of them is a methyl group and the rest are hydrogen atoms, and more preferably, $R^{1b}$ is a hydrogen atom, $R^{2b}$ is a methyl group, and $R^{3b}$ is a hydrogen atom. In the above general formula (1b), $(CH_2)_rCOOM^1$ may form an anhydride with $COOM^1$ or another $(CH_2)_rCOOM^1$, and in that case, $M^1$ and $M^2$ in those groups are not present. In the above general formula (1b), $M^1$ and $M^2$ may be the same or different and may each represent a hydrogen atom, an alkali metal, an alkaline earth metal (1/2 atom), an ammonium group, an alkyl ammonium group, a substituted alkyl ammonium group, an alkyl group, a hydroxyalkyl group, or an alkenyl group. The alkyl groups, hydroxyalkyl groups, and alkenyl groups of $M^1$ and $M^2$ each preferably have 1 or more and 4 or less carbons.

In the above general formula (1b), $M^1$ and $M^2$ may be the same or different and each represent preferably a hydrogen atom, an alkali metal, an alkaline earth metal (1/2 atom), an ammonium group, or an alkyl ammonium group, more preferably a hydrogen atom, an alkali metal, an alkaline earth metal (1/2 atom), or an ammonium group, further preferably a hydrogen atom, an alkali metal, or an alkaline earth metal (1/2 atom), and furthermore preferably a hydrogen atom or an alkali metal. In the above general formula (1b), r in $(CH_2)_rCOOM^1$ is preferably 1.

In the above general formula (2b), $R^{4b}$ and $R^{5b}$ may be the same or different and may each represent a hydrogen atom or a methyl group, and preferably, $R^{4b}$ is a hydrogen atom and $R^{5b}$ is a methyl group from the viewpoint of surface aesthetics enhancement. In the above general formula (2b), $R^{6b}$ may be a hydrogen atom or $-COO(AO)_{n1}R^{7b}$, and is preferably a hydrogen atom from the viewpoint of surface aesthetics enhancement. In the above general formula (2b), $R^{7b}$ may be a hydrogen atom or an alkyl group with 1 or more and 4 or less carbons, and is preferably a methyl group. In the above general formula (2b), AO may be an alkyleneoxy group with 2 or more and 4 or less carbons, and is preferably an ethyleneoxy group. AO preferably contains an ethyleneoxy group.

In the above general formula (2b), n1 is an average number of added moles of AO, and may be 4 or more, and is preferably 5 or more, more preferably 10 or more, and further preferably 20 or more, and may be 200 or less, and is preferably 150 or less, more preferably 120 or less, and further preferably 60 or less from the viewpoints of viscosity and dispersibility of hydraulic compositions. In the above general formula (2b), q1 may be a number of 0 or more and 2 or less, and is preferably 0. In the above general formula (2b), p1 may be 0 or 1, and is preferably 1.

In an exemplary embodiment of the present invention, a total amount of monomer (1b) and monomer (2b) in the constituent monomers of the copolymer used as component (B) of the present invention is preferably 90 mass% or more, more preferably 92 mass% or more, and further preferably 95 mass% or more, and 100 mass% or less. This total amount may be 100 mass%.

In an exemplary embodiment of the present invention, a proportion of monomer (1b) in a total of monomer (1b) and monomer (2b) in the copolymer used as component (B) of the present invention is preferably 1 mass% or more, more preferably 2 mass% or more, further preferably 3 mass% or more, and further preferably 5 mass% or more, and preferably 50 mass% or less, more preferably 40 mass% or less, further preferably 30 mass% or less, and furthermore preferably 25 mass% or less from the viewpoint of dispersibility of hydraulic compositions.

In an exemplary embodiment of the present invention, the copolymer used as component (B) of the present invention has a weight average molecular weight of preferably 10,000 or more, more preferably 20,000 or more, further preferably 30,000 or more, and furthermore preferably 35,000 or more, and preferably 100,000 or less, more preferably 90,000 or less, and further preferably 80,000 or less from the viewpoint of dispersibility of hydraulic compositions.

In an exemplary embodiment of the present invention, the weight average molecular weight of the copolymer used as component (B) of the present invention is measured by a gel permeation chromatography (GPC) method under the following conditions:

*GPC conditions

Instrument: GPC (HLC-8320GPC) manufactured by Tosoh Corporation
Column: G4000PWXL + G2500PWXL (manufactured by Tosoh Corporation)
Eluent: 0.2 M phosphate buffer/$CH_3CN$ = 9/1
Flow rate: 1.0 mL/min
Column temperature: 40°C
Detection: RI
Sample size: 0.2 mg/mL
Standard substance: expressed in terms of polyethylene glycol (monodisperse polyethylene glycol with a known molecular weight, molecular weight 87,500, 250,000, 145,000, 46,000, 24,000)

In an exemplary embodiment of the present invention, examples of the copolymer used as component (B) of the present invention include, for example, one or more selected from the following copolymers,

· polycarboxylic acid-based copolymer 1; a methacrylic acid/methoxy polyethylene glycol (23) monomethacrylate (a polymerization ratio of 75/25 in molar ratio) copolymer, weight average molecular weight = 50,000 (the average number of added moles of ethylene oxide is shown in parentheses),
· polycarboxylic acid-based copolymer 2; a methacrylic acid/methoxy polyethylene glycol (120) monomethacrylate (a polymerization ratio of 80/20 in molar ratio) copolymer, weight average molecular weight = 50,000 (the average number of added moles of ethylene oxide is shown in parentheses), and
· polycarboxylic acid-based copolymer 3; an acrylic acid/polyethylene glycol (50) isoprenyl ether (a polymerization ratio of 75/25 in molar ratio) copolymer, weight average molecular weight = 50,000 (the average number of added moles of ethylene oxide is shown in parentheses).

In an exemplary embodiment of the present invention, when polycarboxylic acid-based copolymers 1, 2, and 3 listed above are used together as component (B) of the present invention, they can be used at a mass ratio of, for example, 50/25/25 by mass ratio of copolymer 1/copolymer 2/copolymer 3. When multiple polycarboxylic acid-based copolymers are used like this, the mass average of the average numbers of added moles of ethylene oxide of those polycarboxylic acid-based copolymers are calculated by the formulation ratios of the copolymers, and is defined as the average number of added moles of ethylene oxide in the polycarboxylic acid-based copolymers (which are used together).

In an exemplary embodiment of the present invention, a content of component (B) of the present invention in the aesthetics enhancing agent of the present invention is preferably 10 mass% or more and more preferably 20 mass% or more, and preferably 60 mass% or less and more preferably 50 mass% or less from the viewpoint of flow retention of hydraulic compositions.

In an exemplary embodiment of the present invention, the surface aesthetics enhancing agent for hydraulic compositions of the present invention can further contain (C) a product stabilizing agent [hereinafter also referred to as component (C)].

In an exemplary embodiment of the present invention, specific examples of component (C) of the present

invention include a polyoxyethylene alkyl ether sulfate or a salt thereof, a polyoxyethylene polyoxypropylene alkyl ether sulfate or a salt thereof, a polyoxyethylene alkyl ether (excluding component (A) of the present invention), a sorbitan fatty acid ester, a polyoxyethylene sorbitan fatty acid ester, a polyoxyethylene fatty acid ester, or the like.

In an exemplary embodiment of the present invention, component (C) of the present invention is preferably one or more compounds selected from compounds represented by the following general formula (c) [hereinafter referred to as component (c-1)],

$$R^{1c}\text{-O-}[(EO)_n \cdot (PO)_m]\text{-}SO_3M \qquad (c)$$

wherein $R^{1c}$ is a hydrocarbon group with an average carbon number of 4 or more and 20 or less, EO is an ethyleneoxy group, PO is a propyleneoxy group, n is an average number of added moles of EO and a number of 1 or more and 50 or less, m is an average number of added moles of PO and a number of 0 or more and 10 or less, EO and PO may be bonded in blocks or at random, and M represents a countercation.

In the above general formula (c), $R^{1c}$ may be a hydrocarbon group with an average carbon number of 4 or more and 20 or less, and preferably 8 or more, more preferably 10 or more, further preferably 12 or more, and furthermore preferably 16 or more, and preferably 20 or less and more preferably 18 or less from the viewpoints of compatibility with surfactants and solubility in water. $R^{1c}$ is preferably a linear or branched alkyl group or a linear or branched alkenyl group, and more preferably a linear or branched alkenyl group and further preferably a linear alkenyl group.

In the above general formula (c), n is an average number of added moles of EO and may be a number of 1 or more and 50 or less, and is preferably 2 or more, more preferably 10 or more, further preferably 15 or more, and furthermore preferably 20 or more, and preferably 40 or less, more preferably 35 or less, further preferably 30 or less, and furthermore preferably 25 or less from the viewpoint of one-component stability. Note that, as excessive air entrainment into a hydraulic composition becomes a factor in reduced strength of a hardened product of the hydraulic composition, component (C) of the present invention preferably entrains less air into hydraulic compositions.

In the above general formula (c), m is an average number of added moles of PO and may be a number of 0 or more and 10 or less, and is preferably 5 or less, more preferably 3 or less, and further preferably 1 or less from the viewpoints of compatibility with surfactants and solubility in water. EO and PO may be bonded in blocks or at random, and are preferably added in blocks from the viewpoint of productivity. m is preferably 0 from the viewpoints of compatibility with the surfactant of the present invention and air entrainment into hydraulic compositions.

In the above general formula (c), examples of M include an inorganic ion selected from a sodium ion, an ammonium ion, a potassium ion, a calcium ion, a magnesium ion, and others, and an organic ammonium ion selected from a monoethanolammonium ion, a diethanolammonium ion, a triethanolammonium ion, a morpholinium ion, and others, and a sodium ion is preferable from the viewpoint of availability.

In an exemplary embodiment of the present invention, for example, a sodium polyoxyethylene alkyl ether sulfate (with an average carbon number of 18 and an average number of added moles of polyoxyethylene of 23) or the like can be used as component (c-1) of the present invention.

In an exemplary embodiment of the present invention, component (c-1) and a component other than component (c-1) [hereinafter referred to as component (c-2)] can also be used together as component (C) of the present invention. Specific examples of component (c-2) include phenyl glycol, phenyl diglycol, diethylene glycol monobutyl ether, triethylene glycol monobutyl ether, tetraethylene glycol monobutyl ether, octyldimethylamine, decyldimethylamine, and others.

In an exemplary embodiment of the present invention, from the viewpoints of product stability and cost reduction, component (C) of the present invention is preferably one or more selected from (c-1) a polyoxyethylene alkyl ether sulfate or a salt thereof and (c-2) phenyl glycol, and more preferably (c-1) a polyoxyethylene alkyl ether sulfate or a salt thereof and (c-2) phenyl glycol, and specifically, (c-1) a polyoxyethylene alkyl ether sulfate or a salt thereof having an average carbon number of 18 and an average number of added moles of ethylene oxide of 23 and (c-2) phenyl glycol are more preferable.

In an exemplary embodiment of the present invention, a mass ratio of a content of component (c-2) to a content of component (c-1) in a total content of components (c-1) and (c-2) in component (C) of the present invention, (c-2)/(c-1), is preferably 0.050 or more and more preferably 0.10 or more from the viewpoint of product stability, and preferably 1.0 or less and more preferably 0.50 or less from the viewpoint of cost reduction, and specifically, 0.125 is particularly preferable. An alkali metal salt in which the countercation is sodium or the like is preferable as the above product stabilizing agent.

In an exemplary embodiment of the present invention, a content of component (C) of the present invention in the aesthetics enhancing agent of the present invention is preferably 1.0 mass% or more and more preferably 5.0 mass% or more from the viewpoint of product stability, and preferably 15 mass% or less and more preferably 10 mass% or less from the viewpoint of cost reduction.

In an exemplary embodiment of the present invention, the surface aesthetics enhancing agent of the present invention can further contain (D) a defoamer [hereinafter also referred to as component (D)].

In an exemplary embodiment of the present invention, examples of component (D) of the present invention include a defoamer with an HLB of less than 3. Specific examples include a polyalkylene glycol alkyl ether-based defoamer

(excluding component (A) of the present invention), a polyalkylene glycol alkyl ester-based defoamer, a polyol polyether-based defoamer, a polyalkylene glycol block polymer-based defoamer, and a silicone-based defoamer, and further, of these defoamers, those having an HLB of less than 3. In an exemplary embodiment of the present invention, component (D) of the present invention is preferably one or more selected from a polyalkylene glycol alkyl ether-based defoamer with an HLB of less than 3 (excluding component (A) of the present invention), a polyalkylene glycol alkyl ester-based defoamer with an HLB of less than 3, and a silicone-based defoamer with an HLB of less than 3, and more preferably a polyalkylene glycol alkyl ether-based defoamer with an HLB of less than 3 from the viewpoint of adjusting the amount of air in hydraulic compositions and the viewpoint of storage stability of the surface aesthetics enhancing agent. Note that the HLB of the defoamer is calculated by using the aforementioned HLB value calculation method of Griffin's method.

In an exemplary embodiment of the present invention, a content of component (D) of the present invention in the aesthetics enhancing agent of the present invention is preferably 0.01 mass% or more and more preferably 0.05 mass% or more from the viewpoint of adjusting the amount of air in hydraulic compositions, and preferably 0.5 mass% or less and more preferably 0.1 mass% or less from the viewpoint of storage stability of the surface aesthetics enhancing agent.

In an exemplary embodiment of the present invention, the aesthetics enhancing agent of the present invention can contain components (A), (B), (C), and (D) as a further specific aspect.

In an exemplary embodiment of the present invention, a content of component (A) in a total content of components (A), (B), (C), and (D) in the aesthetics enhancing agent of the present invention is preferably 1.0 mass% or more and more preferably 3.0 mass% or more from the viewpoint of the effect of reducing the amount of bubble traces on the surface of hardened products of hydraulic compositions, and preferably 15 mass% or less and more preferably 10 mass% or less from the viewpoint of storage stability of the surface aesthetics enhancing agent.

In an exemplary embodiment of the present invention, a content of component (B) in a total content of components (A), (B), (C), and (D) in the aesthetics enhancing agent of the present invention is preferably 60 mass% or more and more preferably 70 mass% or more, and preferably 90 mass% or less and more preferably 85 mass% or less from the viewpoint of flow retention of hydraulic compositions.

In an exemplary embodiment of the present invention, a content of component (C) in a total content of components (A), (B), (C), and (D) in the aesthetics enhancing agent of the present invention is preferably 1 mass% or more and more preferably 5 mass% or more from the viewpoint of product stability, and preferably 30 mass% or less and more preferably 20 mass% or less from the viewpoint of cost reduction.

In an exemplary embodiment of the present invention, a content of component (D) in a total content of components (A), (B), (C), and (D) in the aesthetics enhancing agent of the present invention is preferably 0.01 mass% or more and more preferably 0.1 mass% or more from the viewpoint of adjusting the amount of air in hydraulic compositions, and preferably 1.0 mass% or less and more preferably 0.5 mass% or less from the viewpoint of storage stability of the surface aesthetics enhancing agent.

In an exemplary embodiment of the present invention, a mass ratio of component (A) to component (B) in the aesthetics enhancing agent of the present invention, (A)/(B), is preferably 0.01 or more and more preferably 0.05 or more from the viewpoint of the effect of reducing the amount of bubble traces on the surface of hardened products of hydraulic compositions, and preferably 1.0 or less and more preferably 0.5 or less from the viewpoint of cost reduction.

In an exemplary embodiment of the present invention, a mass ratio of component (A) to component (D) in the aesthetics enhancing agent of the present invention, (A)/(D), is preferably 10 or more and more preferably 15 or more from the viewpoint of product stability, and preferably 100 or less and more preferably 50 or less from the viewpoint of adjusting the amount of air in hydraulic compositions.

Further, in an exemplary embodiment of the present invention, the aesthetics enhancing agent of the present invention as a further specific aspect can be mixed into kneading water used for preparing a hydraulic composition.

In an exemplary embodiment of the present invention, specifically, a content of component (A) of the aesthetics enhancing agent of the present invention in the kneading water is preferably 0.01 mass% or more and more preferably 0.05 mass% or more, and preferably 1.0 mass% or less and more preferably 0.5 mass% or less, and the aesthetics enhancing agent of the present invention can be added such that the content of component (A) falls within this range. Specifically, a content of component (B) of the aesthetics enhancing agent of the present invention in the kneading water is preferably 0.01 mass% or more and more preferably 0.1 mass% or more, and preferably 1.0 mass% or less and more preferably 0.5 mass% or less, and the aesthetics enhancing agent of the present invention can be added such that the content of component (B) falls within this range. Specifically, a content of component (C) of the aesthetics enhancing agent of the present invention in the kneading water is preferably 0.01 mass% or more and more preferably 0.05 mass% or more, and preferably 0.5 mass% or less and more preferably 0.1 mass% or less, and the aesthetics enhancing agent of the present invention can be added such that the content of component (C) falls within this range. Specifically, a content of component (D) of the aesthetics enhancing agent of the present invention in the kneading water is preferably 0.0001 mass% or more and more preferably 0.0005 mass% or more, and preferably 0.01 mass% or less and more preferably 0.005 mass% or less, and the aesthetics enhancing agent of the present invention can be added such that the content of component (D) falls within this range.

In an exemplary embodiment of the present invention, the aesthetics enhancing agent of the present invention can further contain at least one (poly)glycoside having an alkyl group with 8 or more and 20 or less carbons or an alkenyl group with 8 or more and 20 or less carbons and having a degree of condensation of sugar of 1 or more and 5 or less [hereinafter also referred to as the poly(glycoside) of the present invention]. In this case, a mass ratio of a content of the poly(glycoside) to a content of the surfactant of the present invention having the aforementioned dynamic surface tensions, i.e., (poly)glycoside/component (A) (mass ratio) is preferably 0 or more, and preferably 0.05 or less and more preferably 0.01 or less. In an exemplary embodiment of the present invention, (poly)glycoside/component (A) (mass ratio) in the aesthetics enhancing agent of the present invention is preferably 0 from the viewpoint of strength development of hardened products of hydraulic compositions.

In an exemplary embodiment of the present invention, the poly(glycoside) used in the present invention is at least one (poly)glycoside having an alkyl group with 8 or more and 20 or less carbons or an alkenyl group with 8 or more and 20 or less carbons and having a degree of condensation of sugar of 1 or more and 5 or less.

In an exemplary embodiment of the present invention, the poly(glycoside) used in the present invention has an alkyl group or an alkenyl group with preferably 8 or more, and preferably 20 or less, more preferably 18 or less, further preferably 16 or less, furthermore preferably 14 or less, and furthermore preferably 12 or less carbons. The poly(glycoside) of the present invention preferably has an alkyl group with 8 or more and 20 or less carbons from the viewpoint of one-component stability.

In an exemplary embodiment of the present invention, the poly(glycoside) used in the present invention has a degree of condensation of sugar of preferably 1 or more, and more preferably 5 or less, further preferably 4 or less, furthermore preferably 3 or less, and furthermore preferably 2 or less from the viewpoint of water solubility.

In an exemplary embodiment of the present invention, specific examples of a sugar constituting the poly(glycoside) used in the present invention include glucose, maltose, and sucrose. In an exemplary embodiment of the present invention, the poly(glycoside) used in the present invention is preferably at least one (poly)glucoside having an alkyl group with 8 or more and 20 or less carbons or an alkenyl group with 8 or more and 20 or less carbons and having a degree of condensation of sugar of 1 or more and 5 or less, and preferably at least one (poly)glucoside having an alkyl group with 8 or more and 20 or less carbons and having a degree of condensation of sugar of 1 or more and 5 or less.

<Hydraulic composition>

In an exemplary embodiment of the present invention, the present invention provides a hydraulic composition containing a surface aesthetics enhancing agent for hydraulic compositions, a hydraulic powder, and water, wherein the agent has a dynamic surface tension ($\sigma$1) of 55 mN/m or more at a bubble film lifetime of 10 ms and a dynamic surface tension ($\sigma$2) of 35 mN/m or less at a bubble film lifetime of 1000 ms as measured by the bubble pressure method (20°C). In an exemplary embodiment of the present invention, specific examples and preferable aspects of the surface aesthetics enhancing agent for hydraulic compositions in the hydraulic composition of the present invention can be the same as those of the aforementioned surface aesthetics enhancing agent for hydraulic compositions of the present invention [hereinafter also referred to as "the aesthetics enhancing agent of the present invention"].

Further, in another exemplary embodiment of the present invention, the present invention provides a hydraulic composition containing a surfactant, a hydraulic powder, and water, wherein an aqueous solution for measurement obtained by adding the surfactant at a concentration of 0.05 mass% to the aforementioned bleeding water of the hydraulic composition has a dynamic surface tension ($\sigma$1) of 55 mN/m or more at a bubble film lifetime of 10 ms and a dynamic surface tension ($\sigma$2) of 35 mN/m or less at a bubble film lifetime of 1000 ms as measured by the bubble pressure method (20°C). In an exemplary embodiment of the present invention, specific examples and preferable aspects of the surfactant in the hydraulic composition of the present invention can be the same as those of the aforementioned surfactant for use in surface aesthetics enhancing agents for hydraulic compositions of the present invention [hereinafter also referred to as "the surfactant of the present invention" and also referred to as component (A)].

When a reference is made to the hydraulic composition of the present invention, it includes the above two hydraulic compositions.

In an exemplary embodiment of the present invention, an example of the hydraulic powder used in the present invention is cement. Examples of the cement used in the present invention include ordinary Portland cement, high early strength Portland cement, ultra high early strength Portland cement, sulfate resistant Portland cement, low heat Portland cement, white Portland cement, and Eco-Cement (for example, JIS R 5214 or the like). Among these, the cement used in the present invention is preferably ordinary Portland cement, sulfate resistant Portland cement, or white Portland cement, and more preferably ordinary Portland cement.

Further, in an exemplary embodiment of the present invention, the cement used in the present invention can contain blast furnace slag, fly ash, silica fume, or the like, and can contain non-hydraulic fine limestone powder, or the like.

In an exemplary embodiment of the present invention, silica fume cement or blast furnace slag cement obtained by mixing the foregoing with cement can be used as the hydraulic powder used in the present invention.

In an exemplary embodiment of the present invention, the aesthetics enhancing agent of the present invention in the hydraulic composition of the present invention is preferably 0.001 parts by mass or more, more preferably 0.005 parts by mass or more, further preferably 0.010 parts by mass or more, and furthermore preferably 0.03 parts by mass or more, and preferably 10 parts by mass or less, more preferably 3.0 parts by mass or less, further preferably 2.5 parts by mass or less, furthermore preferably 2.0 parts by mass or less, and more preferably 1.0 parts by mass or less relative to 100 parts by mass of the hydraulic powder from the viewpoint of the effect of reducing the amount of bubble traces on the surface of a hardened product of the hydraulic composition.

In an exemplary embodiment of the present invention, a content of the surfactant of the present invention in the hydraulic composition of the present invention is preferably 0.001 parts by mass or more, more preferably 0.005 parts by mass or more, further preferably 0.010 parts by mass or more, and furthermore preferably 0.03 parts by mass or more, and preferably 10 parts by mass or less, more preferably 3.0 parts by mass or less, further preferably 2.5 parts by mass or less, furthermore preferably 2.0 parts by mass or less, and more preferably 1.0 parts by mass or less relative to 100 parts by mass of the hydraulic powder from the viewpoint of the effect of reducing the amount of bubble traces on the surface of a hardened product of the hydraulic composition.

In an exemplary embodiment of the present invention, the hydraulic composition of the present invention can contain (B) a cement dispersant [hereinafter also referred to as component (B)] in addition to the aesthetics enhancing agent of the present invention or the surfactant of the present invention. In an exemplary embodiment of the present invention, specific examples and preferable aspects of the cement dispersant in the hydraulic composition of the present invention can be the same as those of cement dispersant (B) contained in the aforementioned aesthetics enhancing agent of the present invention.

In an exemplary embodiment of the present invention, when the hydraulic composition of the present invention contains component (B), a content of component (B) relative to 100 parts by mass of the hydraulic powder is preferably 0.10 parts by mass or more and more preferably 0.20 parts by mass or more from the viewpoint of enhancing flowability of the hydraulic composition, and preferably 1.0 parts by mass or less and more preferably 0.50 parts by mass or less from the viewpoint of durability of a hardened product of the hydraulic composition.

In an exemplary embodiment of the present invention, when the hydraulic composition of the present invention contains the aforementioned aesthetics enhancing agent of the present invention and the aesthetics enhancing agent contains a cement dispersant as component (B), a total content of component (B) in the hydraulic composition of the present invention relative to 100 parts by mass of the hydraulic powder is preferably 0.10 parts by mass or more and more preferably 0.20 parts by mass or more from the viewpoint of enhancing flowability of the hydraulic composition, and preferably 1.0 parts by mass or less and more preferably 0.50 parts by mass or less from the viewpoint of durability of a hardened product of the hydraulic composition.

In an exemplary embodiment of the present invention, the hydraulic composition of the present invention can further contain (C) a product stabilizing agent [hereinafter also referred to as component (C)] in addition to the aesthetics enhancing agent of the present invention or the surfactant of the present invention. In an exemplary embodiment of the present invention, specific examples and preferable aspects of component (C) in the hydraulic composition of the present invention can be the same as those of product stabilizing agent (C) contained in the aforementioned aesthetics enhancing agent of the present invention.

In an exemplary embodiment of the present invention, when the hydraulic composition of the present invention contains the product stabilizing agent, a content of component (C) relative to 100 parts by mass of the hydraulic powder is preferably 0.01 parts by mass or more and more preferably 0.02 parts by mass or more from the viewpoint of product stability, and preferably 1.0 parts by mass or less and more preferably 0.1 parts by mass or less from the viewpoint of cost reduction.

In an exemplary embodiment of the present invention, when the hydraulic composition of the present invention contains component (c-1), a content of component (c-1) relative to 100 parts by mass of the hydraulic powder is preferably 0.01 parts by mass or more and more preferably 0.02 parts by mass or more from the viewpoint of product stability, and preferably 1.0 parts by mass or less and more preferably 0.1 parts by mass or less from the viewpoint of cost reduction.

In an exemplary embodiment of the present invention, the hydraulic composition of the present invention can further contain (D) a defoamer [hereinafter also referred to as component (D)] in addition to the aesthetics enhancing agent of the present invention or the surfactant of the present invention. In an exemplary embodiment of the present invention, specific examples and preferable aspects of the defoamer in the hydraulic composition of the present invention can be the same as those of defoamer (D) contained in the aforementioned aesthetics enhancing agent of the present invention.

In an exemplary embodiment of the present invention, when the hydraulic composition of the present invention contains component (D), a content of component (D) relative to 100 parts by mass of the hydraulic powder is preferably 0.0001 parts by mass or more and more preferably 0.0005 parts by mass or more, and preferably 1.0 parts by mass or less and more preferably 0.5 parts by mass or less from the viewpoint of durability of a hardened product of the hydraulic composition.

In an exemplary embodiment of the present invention, when the hydraulic composition of the present invention

contains the aforementioned aesthetics enhancing agent of the present invention and the aesthetics enhancing agent contains a defoamer as component (D), a total content of component (D) in the hydraulic composition of the present invention relative to 100 parts by mass of the hydraulic powder is preferably 0.0001 parts by mass or more and more preferably 0.0005 parts by mass or more, and preferably 1.0 parts by mass or less and more preferably 0.5 parts by mass or less from the viewpoint of durability of a hardened product of the hydraulic composition.

In an exemplary embodiment of the present invention, the hydraulic composition of the present invention can further contain an air entraining agent in addition to the aesthetics enhancing agent of the present invention or the surfactant of the present invention.

In an exemplary embodiment of the present invention, when the hydraulic composition of the present invention contains the air entraining agent, an air entraining agent having a diffusion coefficient smaller than a diffusion coefficient of the surfactant of the present invention is preferably used from the viewpoint of the effect of reducing the amount of bubble traces on the surface of a hardened product of the hydraulic composition.

In an exemplary embodiment of the present invention, when the hydraulic composition of the present invention contains the air entraining agent, specific examples include rosin acid, an alkyl sulfate or a salt thereof, a polyoxyethylene alkyl ether sulfate or a salt thereof (excluding component (c-1) of the present invention), a polyoxyethylene alkyl ether phosphate or a salt thereof, or the like. In an exemplary embodiment of the present invention, the air entraining agent used in the hydraulic composition of the present invention is preferably a polyoxyethylene alkyl ether sulfate or a salt thereof (excluding component (c-1) of the present invention) from the viewpoint of enhancing durability of a hardened product of the hydraulic composition.

In an exemplary embodiment of the present invention, when the hydraulic composition of the present invention contains the air entraining agent, a content of the air entraining agent relative to 100 parts by mass of the hydraulic powder is preferably 0.001 parts by mass or more and more preferably 0.01 parts by mass or more, and preferably 1.0 parts by mass or less and more preferably 0.5 parts by mass or less from the viewpoint of durability of a hardened product of the hydraulic composition.

In an exemplary embodiment of the present invention, the hydraulic composition of the present invention can contain components (A), (B), (C), and (D) of the present invention, the hydraulic powder, and water as a specific aspect. Further, in another exemplary embodiment of the present invention, the hydraulic composition of the present invention can contain components (A), (B), and (D) of the present invention, the hydraulic powder, and water.

In an exemplary embodiment of the present invention, a mass ratio of component (A) to component (B) in the hydraulic composition of the present invention, (A)/(B), is preferably 0.01 or more and more preferably 0.05 or more from the viewpoint of the effect of reducing the amount of bubble traces on the surface of a hardened product of the hydraulic composition, and preferably 1.0 or less and more preferably 0.5 or less from the viewpoint of cost reduction.

In an exemplary embodiment of the present invention, a mass ratio of component (A) to component (D) in the hydraulic composition of the present invention, (A)/(D), is preferably 10 or more and more preferably 15 or more from the viewpoint of product stability, and preferably 100 or less and more preferably 50 or less from the viewpoint of adjusting the amount of air in the hydraulic composition.

In an exemplary embodiment of the present invention, a water/hydraulic powder ratio in the hydraulic composition of the present invention [water to hydraulic powder in hydraulic composition (mass of water/mass of hydraulic powder $\times$ 100), which is abbreviated as W/P in usual and abbreviated as W/C when the hydraulic powder is cement] is preferably 20% or more and more preferably 30% or more, and preferably 95% or less and more preferably 80% or less from the viewpoints of workability and economy.

In an exemplary embodiment of the present invention, in the hydraulic composition of the present invention, the amount of air contained in the hydraulic composition is not particularly limited, but is preferably 0% or more and preferably 3.0% or less from the viewpoint of durability of a hardened product of the hydraulic composition. The addition amount of the defoamer as component (D) of the present invention can be adjusted such that the amount of air in the hydraulic composition of the present invention falls within the above range.

In an exemplary embodiment of the present invention, the hydraulic composition of the present invention can further contain an aggregate. Examples of the aggregate include a fine aggregate, a coarse aggregate, or the like, and the fine aggregate is preferably pit sand, land sand, river sand, or crushed sand, and the coarse aggregate is preferably pit gravel, land gravel, river gravel, or crushed stone. A lightweight aggregate can also be used depending on the application. Note that the terms for aggregate are based on "Concrete Handbook" (June 10, 1998, published by Gijutsu Shoin Company, Limited).

The aggregate can be used in such a usual range that it is used for the preparation of concrete, mortar, or the like. When the hydraulic composition is concrete, the coarse aggregate is used in an amount of preferably 50% or more, more preferably 55% or more, and further preferably 60% or more, and preferably 100% or less, more preferably 90% or less, and further preferably 80% or less by bulk volume from the viewpoint of properties of concrete. The bulk volume is the proportion of the volume of the coarse aggregate (including voids) in 1 $m^3$ of the concrete. Further, when the hydraulic composition is concrete, the fine aggregate is used in an amount of preferably 500 $kg/m^3$ or more, more preferably 600

kg/$m^3$ or more, and further preferably 700 kg/$m^3$ or more, and preferably 1000 kg/$m^3$ or less and preferably 900 kg/$m^3$ or less from the viewpoint of filling a mold or the like in an enhanced manner. When the hydraulic composition is mortar, the fine aggregate is used in an amount of preferably 800 kg/$m^3$ or more, more preferably 900 kg/$m^3$ or more, and further preferably 1000 kg/$m^3$ or more, and preferably 2000 kg/$m^3$ or less, more preferably 1800 kg/$m^3$ or less, and further preferably 1700 kg/$m^3$ or less.

In an exemplary embodiment of the present invention, the hydraulic composition of the present invention can also further contain other components in addition to the above components. Examples include a retardant, a thickener, a waterproofing agent, a fluidizer, an early strength enhancing agent, or the like.

In an exemplary embodiment of the present invention, examples of the early strength enhancing agent contained in the hydraulic composition of the present invention include a compound selected from alkali metal and alkaline earth metal hydrochloride salts, sulfate salts, nitrate salts, nitrite salts, cyanate salts, thiocyanate salts, thiosulfate salts, and formate salts, or an organic compound selected from an alkanolamine, a glycerin derivative, a formaldehyde derivative, and a catechol derivative, and nanoparticles of a hydration product of Portland cement (C-S-H and calcium hydroxide).

In an exemplary embodiment of the present invention, concrete or mortar can be used as the hydraulic composition of the present invention. The hydraulic composition of the present invention is useful in any field, and its application is for self-leveling, for refractories, for plaster, for light-weight or heavyweight concrete, for air entrainment, for repairing, for the prepacked, for tremie, for ground improvement, for grouting, for cold weather, and others.

<Method for producing hydraulic composition>

In an exemplary embodiment of the present invention, the present invention provides a method for producing a hydraulic composition, the method including mixing a surface aesthetics enhancing agent for hydraulic compositions [hereinafter also referred to as "the aesthetics enhancing agent of the present invention"], a hydraulic powder, and water to prepare the hydraulic composition, wherein the agent has a dynamic surface tension ($\sigma 1$) of 55 mN/m or more at a bubble film lifetime of 10 ms and a dynamic surface tension ($\sigma 2$) of 35 mN/m or less at a bubble film lifetime of 1000 ms as measured by the bubble pressure method (20°C).

Further, in an exemplary embodiment of the present invention, the present invention provides a method for producing a hydraulic composition, the method including mixing the surfactant for use in surface aesthetics enhancing agents for hydraulic compositions of the present invention [hereinafter also referred to as "the surfactant of the present invention" and also referred to as component (A)], a hydraulic powder, and water to prepare the hydraulic composition, wherein the surfactant has a dynamic surface tension ($\sigma 1$) of 55 mN/m or more at a bubble film lifetime of 10 ms and a dynamic surface tension ($\sigma 2$) of 35 mN/m or less at a bubble film lifetime of 1000 ms, as measured by the bubble pressure method (20°C) using an aqueous solution for measurement obtained by adding the surfactant at a concentration of 0.05 mass% to the aforementioned bleeding water of the hydraulic composition.

In an exemplary embodiment of the present invention, specific examples and preferable aspects of the aesthetics enhancing agent of the present invention used in the method for producing a hydraulic composition of the present invention can be the same as those of the surface aesthetics enhancing agent for hydraulic compositions of the present invention. Further, in an exemplary embodiment of the present invention, specific examples and preferable aspects of the surfactant of the present invention and optional components used in the method for producing a hydraulic composition of the present invention can be the same as those of the surfactant and the optional components described in the surface aesthetics enhancing agent for hydraulic compositions of the present invention. Further, in an exemplary embodiment of the present invention, specific examples and preferable aspects of the hydraulic powder used in the method for producing a hydraulic composition of the present invention can be the same as in the hydraulic composition of the present invention. Further, the matters described in the surface aesthetics enhancing agent for hydraulic compositions and the hydraulic composition of the present invention can be appropriately applied to the method for producing a hydraulic composition of the present invention.

In an exemplary embodiment of the present invention, in the method for producing a hydraulic composition of the present invention, the surfactant of the present invention, the hydraulic powder, and water can be mixed to prepare the hydraulic composition. Further, in an exemplary embodiment of the present invention, in the method for producing a hydraulic composition of the present invention, the surfactant of the present invention, optional components, the hydraulic powder, and water can be mixed to prepare the hydraulic composition.

In an exemplary embodiment of the present invention, in the method for producing a hydraulic composition of the present invention, the surfactant of the present invention and the aforementioned optional components can be mixed separately with the hydraulic powder to prepare the hydraulic composition. However, in an exemplary embodiment of the present invention where the surfactant of the present invention and the optional components are mixed in advance, they can be mixed together with the hydraulic powder without the need for a new additional tank. In other words, in the method for producing a hydraulic composition of the present invention, the aesthetics enhancing agent of the present invention and the hydraulic powder can be mixed.

In an exemplary embodiment of the present invention, the contents of the components, the hydraulic powder, and water described in the hydraulic composition of the present invention can be read as mixing amounts and applied as the mixing amounts of the components, the hydraulic powder, and water used in the method for producing a hydraulic composition of the present invention.

In an exemplary embodiment of the present invention, in the method for producing a hydraulic composition of the present invention, the surfactant of the present invention, the optional components, and water can be mixed in advance and thereafter mixed with the hydraulic powder such as cement or the like from the viewpoint of smoothly mixing the surfactant of the present invention and the optional components with the hydraulic powder. Further, in another exemplary embodiment of the present invention, in the method for producing a hydraulic composition of the present invention, the aesthetics enhancing agent of the present invention containing water, (the optional components used in the hydraulic composition as necessary), and water can be mixed in advance and thereafter mixed with the hydraulic powder.

Further, in another exemplary embodiment of the present invention, in the method for producing a hydraulic composition of the present invention, the aesthetics enhancing agent of the present invention can be added and mixed to the hydraulic powder such as cement or the like. In another exemplary embodiment of the present invention, it is preferable that the aesthetics enhancing agent of the present invention be added to the hydraulic powder to achieve the aforementioned addition amounts (contents) of the surfactant of the present invention and the optional components.

In an exemplary embodiment of the present invention, in the method for producing a hydraulic composition of the present invention, specifically, an addition amount of the aesthetics enhancing agent of the present invention expressed as parts by mass of solid contents relative to 100 parts by mass of the hydraulic powder is preferably 0.001 parts by mass or more, more preferably 0.005 parts by mass or more, further preferably 0.01 parts by mass or more, and furthermore preferably 0.03 parts by mass or more from the viewpoint of improving surface aesthetics, and preferably 10 parts by mass or less, more preferably 3.0 parts by mass or less, further preferably 2.5 parts by mass or less, furthermore preferably 2.0 parts by mass or less, and furthermore preferably 1.0 parts by mass or less from the viewpoint of ensuring high flowability to improve surface aesthetics.

In an exemplary embodiment of the present invention, in the method for producing a hydraulic composition of the present invention, mixing can be performed by using a mixer such as a mortar mixer, a forced twin-shaft mixer, or the like. Further, a mixing time is preferably 1 minute or more and more preferably 2 minutes or more, and preferably 5 minutes or less and more preferably 3 minutes or less. In the preparation of the hydraulic composition, the materials or agents described in the hydraulic composition can be used in the amounts described therein.

<Method for producing hardened product of hydraulic composition>

In an exemplary embodiment of the present invention, the present invention provides a method for producing a hardened product of a hydraulic composition [hereinafter also referred to as "the method for producing a hardened product of the present invention"], the method including a step of mixing a surface aesthetics enhancing agent for hydraulic compositions [hereinafter also referred to as "the aesthetics enhancing agent of the present invention"], a hydraulic powder, and water to prepare the hydraulic composition, the agent having a dynamic surface tension ($\sigma$1) of 55 mN/m or more at a bubble film lifetime of 10 ms and a dynamic surface tension ($\sigma$2) of 35 mN/m or less at a bubble film lifetime of 1000 ms as measured by the bubble pressure method (20°C), a step of filling a mold with the prepared hydraulic composition and hardening the same, and a step of demolding the hardened hydraulic composition.

Further, in another exemplary embodiment of the present invention, the present invention provides a method for producing a hardened product of a hydraulic composition [hereinafter also referred to as "the method for producing a hardened product of the present invention"], the method including a step of mixing a surface aesthetics enhancing agent for hydraulic compositions, a hydraulic powder, and water to prepare the hydraulic composition, a step of filling a mold with the prepared hydraulic composition and hardening the same, and a step of demolding the hardened hydraulic composition, wherein the surface aesthetics enhancing agent for hydraulic compositions [hereinafter also referred to as "the aesthetics enhancing agent of the present invention"] contains a surfactant [hereinafter also referred to as "the surfactant of the present invention" and also referred to as component (A)] having a dynamic surface tension ($\sigma$1) of 55 mN/m or more at a bubble film lifetime of 10 ms and a dynamic surface tension ($\sigma$2) of 35 mN/m or less at a bubble film lifetime of 1000 ms, as measured by the bubble pressure method (20°C) using an aqueous solution for measurement obtained by adding the surfactant at a concentration of 0.05 mass% to the aforementioned bleeding water of the hydraulic composition.

When a reference is made to the method for producing a hardened product of the present invention, it includes the above two methods for producing a hardened product of the present invention.

In an exemplary embodiment of the present invention, specific examples and preferable aspects of the surfactant of the present invention and optional components used in the method for producing a hardened product of a hydraulic composition of the present invention can be the same as those in the surface aesthetics enhancing agent for hydraulic compositions of the present invention. Further, in an exemplary embodiment of the present invention, specific examples and preferable aspects of the aesthetics enhancing agent of the present invention used in the method for producing a

hydraulic composition of the present invention can be the same as those of the surface aesthetics enhancing agent for hydraulic compositions of the present invention. Further, in an exemplary embodiment of the present invention, specific examples and preferable aspects of the hydraulic powder used in the method for producing a hardened product of a hydraulic composition of the present invention can be the same as in the hydraulic composition of the present invention. Further, in an exemplary embodiment of the present invention, the matters described in the surface aesthetics enhancing agent for hydraulic compositions and the hydraulic composition of the present invention, which are used in the method for producing a hardened product of a hydraulic composition of the present invention, can be appropriately applied to the method for producing a hardened product of a hydraulic composition of the present invention.

In an exemplary embodiment of the present invention, the step to prepare the hydraulic composition included in the method for producing a hardened product of a hydraulic composition of the present invention can be the same as in the method for producing a hydraulic composition of the present invention.

In an exemplary embodiment of the present invention, the hydraulic composition is obtained in the preparation of the hydraulic composition included in the method for producing a hardened product of a hydraulic composition of the present invention, and the hydraulic composition is further filled into the mold and hardened by curing.

In an exemplary embodiment of the present invention, examples of the mold used in the step of filling a mold with the hydraulic composition and hardening the same included in the method for producing a hardened product of a hydraulic composition of the present invention include formwork for buildings, formwork for concrete products, and others. Examples of a method for filling the mold include a method in which the hydraulic composition is directly poured from a mixer, a method in which the hydraulic composition is pumped and introduced via a pump into the mold, and others.

In an exemplary embodiment of the present invention, from the viewpoint of ease of release of the hardened product of the hydraulic composition at demolding, a mold release agent is preferably applied to the mold used in the step of filling a mold with the hydraulic composition and hardening the same included in the method for producing a hardened product of a hydraulic composition of the present invention. As the mold release agent, (1) a mineral oil such as kerosene, diesel oil, spindle oil, transformer oil, machine oil, or the like, (2) a synthetic oil such as a polyalkylene glycol or the like, (3) a vegetable oil such as rapeseed oil, coconut oil, palm oil, soybean oil, or the like, (4) oils and fats, (5) a fatty acid ester, or the like can be used, and the foregoing may be applied as-is as an "oilbased mold release agent" or emulsified with water and applied as a "water-based mold release agent."

In an exemplary embodiment of the present invention, in the step of filling a mold with the hydraulic composition and hardening the same included in the method for producing a hardened product of a hydraulic composition of the present invention, hardening can be facilitated by performing heat curing when curing the hydraulic composition to facilitate hardening. Here, heat curing can be performed to facilitate hardening by keeping the hydraulic composition at a temperature of 40°C or more and 80°C or less.

In an exemplary embodiment of the present invention, the hardened product of the hydraulic composition can be obtained by demolding the hardened hydraulic composition. At demolding, the hardened product of the hydraulic composition preferably has a sufficient compression strength. The compression strength at demolding is, for example, preferably equal to or greater than the strength described in "The Japan Society of Civil Engineers Standard Specification set in 2023, [Construction], Explanation, Table 8.8.1."

In an exemplary embodiment of the present invention, examples of hardened products of hydraulic compositions obtained by the method for producing a hardened product of a hydraulic composition of the present invention using formwork for concrete products include civil engineering products such as concrete piles, concrete poles, various types of revetment block products, box culvert products, segment products used for tunnel construction or the like, girder products for bridge piers, and others, and include building products such as curtain wall products, building member products used for columns, beams, or floor plates, and others.

In an exemplary embodiment of the present invention, in the preparation of the hydraulic composition included in the method for producing a hardened product of a hydraulic composition of the present invention, a time period between the contact of the hydraulic powder with water and demolding is preferably 16 hours or more and 72 hours or less from the viewpoint of obtaining the strength required for demolding and the viewpoint of enhancing the production cycle.

<Method for enhancing surface aesthetics of hardened product of hydraulic composition>

In an exemplary embodiment of the present invention, the present invention provides a method for enhancing the surface aesthetics of a hardened product of a hydraulic composition [hereinafter also referred to as "the aesthetics enhancing method of the present invention"], the method including adding a surfactant [hereinafter also referred to as "the surfactant of the present invention"] to the hydraulic composition containing a hydraulic powder and water, wherein the surfactant has a dynamic surface tension ($\sigma 1$) of 55 mN/m or more at a bubble film lifetime of 10 ms and a dynamic surface tension ($\sigma 2$) of 35 mN/m or less at a bubble film lifetime of 1000 ms as measured by the bubble pressure method (20°C).

Further, in an exemplary embodiment of the present invention, the present invention provides a method for enhancing the surface aesthetics of a hardened product of a hydraulic composition [hereinafter also referred to as "the aesthetics enhancing method of the present invention"], the method including adding the surfactant of the present invention to the hydraulic composition containing a hydraulic powder and water, wherein the surfactant [hereinafter also

referred to as "the surfactant of the present invention"] has a dynamic surface tension (σ1) of 55 mN/m or more at a bubble film lifetime of 10 ms and a dynamic surface tension (σ2) of 35 mN/m or less at a bubble film lifetime of 1000 ms, as measured by the bubble pressure method (20°C) using an aqueous solution for measurement obtained by adding the surfactant at a concentration of 0.05 mass% to the aforementioned bleeding water of the hydraulic composition.

Further, in an exemplary embodiment of the present invention, the present invention provides a method for enhancing the surface aesthetics of a hardened product of a hydraulic composition [hereinafter also referred to as "the aesthetics enhancing method of the present invention"], the method including adding the surface aesthetics enhancing agent for hydraulic compositions of the present invention [hereinafter also referred to as "the aesthetics enhancing agent of the present invention"] to the hydraulic composition containing a hydraulic powder and water, wherein the aesthetics enhancing agent [hereinafter also referred to as "the aesthetics enhancing agent of the present invention"] has a dynamic surface tension (σ1) of 55 mN/m or more at a bubble film lifetime of 10 ms and a dynamic surface tension (σ2) of 35 mN/m or less at a bubble film lifetime of 1000 ms as measured by the bubble pressure method (20°C).

When a reference is made to the aesthetics enhancing method of the present invention, it includes the above three aesthetics enhancing methods of the present invention.

In an exemplary embodiment of the present invention, specific examples and preferable aspects of the surfactant of the present invention and optional components used in the aesthetics enhancing method of the present invention can be the same as those described in the surfactant for use in surface aesthetics enhancing agents for hydraulic compositions of the present invention. Further, specific examples and preferable aspects of the aesthetics enhancing agent of the present invention and optional components used in the aesthetics enhancing method of the present invention can be the same as those described in the surface aesthetics enhancing agent for hydraulic compositions of the present invention. Further, specific examples and preferable aspects of the hydraulic powder used in the aesthetics enhancing method of the present invention can be the same as those described in the hydraulic composition of the present invention. Further, the matters described in the aesthetics enhancing agent, the hydraulic composition, and the method for producing a hardened product of the same of the present invention can be appropriately applied to the aesthetics enhancing method of the present invention.

<Surface aesthetics enhancing kit for hardened products of hydraulic compositions>

In an exemplary embodiment of the present invention, the present invention provides a surface aesthetics enhancing kit for hardened products of hydraulic compositions, the kit including, in combination, a first agent containing the surfactant of the present invention and a second agent containing the aforementioned cement dispersant. In other words, in an exemplary embodiment of the present invention, the present invention provides a surface aesthetics enhancing kit for hardened products of hydraulic compositions [hereinafter also referred to as "the aesthetics enhancing kit of the present invention"], the kit including, in combination, a first agent containing a surfactant [hereinafter also referred to as "the surfactant of the present invention"] and a second agent containing the aforementioned cement dispersant [hereinafter also referred to as "the cement dispersant of the present invention"], wherein an aqueous solution for measurement obtained by adding the surfactant at a concentration of 0.05 mass% to the aforementioned bleeding water of the hydraulic composition has a dynamic surface tension (σ1) of 55 mN/m or more at a bubble film lifetime of 10 ms and a dynamic surface tension (σ2) of 35 mN/m or less at a bubble film lifetime of 1000 ms as measured by the bubble pressure method (20°C).

Further, in another exemplary embodiment of the present invention, the present invention provides a surface aesthetics enhancing kit for hardened products of hydraulic compositions, the kit including, in combination, aqueous solution α containing the surfactant of the present invention and aqueous solution β containing the aforementioned cement dispersant. In other words, in an exemplary embodiment of the present invention, the present invention provides a surface aesthetics enhancing kit for hardened products of hydraulic compositions [hereinafter also referred to as "the aesthetics enhancing kit of the present invention"], the kit including, in combination, aqueous solution α containing a surfactant [hereinafter also referred to as "the surfactant of the present invention"] and aqueous solution β containing the aforementioned cement dispersant [hereinafter also referred to as "the cement dispersant of the present invention"], wherein an aqueous solution for measurement obtained by adding the surfactant at a concentration of 0.05 mass% to the aforementioned bleeding water of the hydraulic composition has a dynamic surface tension (σ1) of 55 mN/m or more at a bubble film lifetime of 10 ms and a dynamic surface tension (σ2) of 35 mN/m or less at a bubble film lifetime of 1000 ms as measured by the bubble pressure method (20°C).

When a reference is made to the aesthetics enhancing kit of the present invention, it includes the above two aesthetics enhancing kits.

In an exemplary embodiment of the present invention, specifically, the aesthetics enhancing kit of the present invention is composed by including, in a separate state, aqueous solution α containing the surfactant of the present invention and aqueous solution β containing the aforementioned cement dispersant of the present invention.

In an exemplary embodiment of the present invention, in the aesthetics enhancing kit of the present invention, the

matters described in the surfactant for use in surface aesthetics enhancing agents for hydraulic compositions, the surface aesthetics enhancing agent for hydraulic compositions, the hydraulic composition, the method for producing a hydraulic composition, the method for producing a hardened product of a hydraulic composition, and the method for enhancing the surface aesthetics of a hardened product of a hydraulic composition of the present invention can be appropriately applied to the first agent and preferably aqueous solution α containing the surfactant of the present invention, and the second agent and preferably aqueous solution β containing the aforementioned cement dispersant of the present invention.

In an exemplary embodiment of the present invention, the aesthetics enhancing kit of the present invention can be used in such a manner that the kit is contained in a container in which the components can be stored separately and the components are mixed when the kit is used. In an exemplary embodiment of the present invention, preferable is a kit including the first agent and preferably aqueous solution α containing the surfactant of the present invention and the second agent and preferably aqueous solution β containing the cement dispersant of the present invention filled into a container in which they are retained separately from each other.

In an exemplary embodiment of the present invention, an amount of the surfactant of the present invention in the first agent and preferably aqueous solution α is preferably 1 mass% or more, more preferably 5 mass% or more, and more preferably 10 mass% or more, and preferably 100 mass% or less, more preferably 50 mass% or less, and further preferably 20 mass% or less.

In an exemplary embodiment of the present invention, the cement dispersant of the present invention is preferably the copolymer containing monomer (1b) represented by the aforementioned general formula (1b) and monomer (2b) represented by the aforementioned general formula (2b) as constituent monomers, and an amount of the cement dispersant of the present invention as a content of the copolymer in the second agent and preferably aqueous solution β is preferably 10 mass% or more and more preferably 20 mass% or more, and preferably 50 mass% or less and more preferably 40 mass% or less.

In an exemplary embodiment of the present invention, in the aesthetics enhancing kit of the present invention, at least one of the first agent and preferably aqueous solution α containing the surfactant of the present invention and the second agent and preferably aqueous solution β containing the cement dispersant of the present invention preferably contains the product stabilizing agent which is an optional component from the viewpoint of compatibility between aqueous solution α and aqueous solution β.

In an exemplary embodiment of the present invention, in the aesthetics enhancing kit of the present invention, at least one of the first agent and preferably aqueous solution α containing the surfactant of the present invention and the second agent and preferably aqueous solution β containing the cement dispersant of the present invention preferably contains the defoamer or air entraining agent which is an optional component from the viewpoint of air entraining properties of hydraulic compositions.

In an exemplary embodiment of the present invention, in the aesthetics enhancing kit of the present invention, at least one of the first agent and preferably aqueous solution α containing the surfactant of the present invention and the second agent and preferably aqueous solution β containing the cement dispersant of the present invention preferably contains the defoamer which is an optional component from the viewpoint of air entraining properties of hydraulic compositions, and at least one of the first agent and preferably aqueous solution α containing the surfactant of the present invention and the second agent and preferably aqueous solution β containing the cement dispersant of the present invention preferably contains the air entraining agent which is an optional component from the viewpoint of air entraining properties of hydraulic compositions.

In an exemplary embodiment of the present invention, in the first agent and preferably aqueous solution α containing the surfactant of the present invention and the second agent and preferably aqueous solution β containing the cement dispersant of the present invention in the aesthetics enhancing kit of the present invention, from the viewpoint of the effect of reducing the amount of bubble traces on the surface of hardened products of hydraulic compositions, a mass ratio of the surfactant of the present invention to the cement dispersant of the present invention and preferably the aforementioned copolymer which is the cement dispersant of the present invention, "surfactant/cement dispersant," is preferably 10/90 or more and preferably 90/10 or less, and they are mixed in this range.

In an exemplary embodiment of the present invention, in the aesthetics enhancing kit of the present invention, the first agent containing the surfactant of the present invention and the second agent containing the cement dispersant of the present invention are used by mixing them with water, and a total content of the surfactant of the present invention and the cement dispersant of the present invention and preferably the aforementioned copolymer which is the cement dispersant of the present invention is preferably 0.1 parts by mass or more and more preferably 0.15 parts by mass or more, and preferably 1 part by mass or less and more preferably 0.5 parts by mass or less relative to 100 parts by mass of water from the viewpoint of the effect of reducing the amount of bubble traces on the surface of hardened products of hydraulic compositions.

The present invention also encompasses the following aspects.

<1> A surface aesthetics enhancing agent for hydraulic compositions containing a surfactant, wherein an aqueous

solution of the surfactant at a concentration of 0.3 mass% has a dynamic surface tension (σ3) of 55 mN/m or more at a bubble film lifetime of 10 ms and a dynamic surface tension (σ4) of 28 mN/m or less at a bubble film lifetime of 1000 ms as measured by the bubble pressure method (20°C).
<2> A surfactant for use in surface aesthetics enhancing agents for hydraulic compositions, wherein the surfactant has a dynamic surface tension (σ1) of 55 mN/m or more at a bubble film lifetime of 10 ms and a dynamic surface tension (σ2) of 35 mN/m or less at a bubble film lifetime of 1000 ms as measured by the bubble pressure method (20°C).
<3> A surfactant for use in surface aesthetics enhancing agents for hydraulic compositions, wherein an aqueous solution for measurement obtained by adding the surfactant at a concentration of 0.05 mass% to the bleeding water of the hydraulic composition described below has a dynamic surface tension (σ1) of 55 mN/m or more at a bubble film lifetime of 10 ms and a dynamic surface tension (σ2) of 35 mN/m or less at a bubble film lifetime of 1000 ms as measured by the bubble pressure method (20°C),

[bleeding water of hydraulic composition]
bleeding water of ordinary Portland cement is obtained by adding 4 kg of tap water and 1 kg of ordinary Portland cement to a 5-L polybottle, shaking the polybottle thoroughly, and then allowing the polybottle to stand in a 20°C environment for 24 hours, followed by filtering the supernatant in the polybottle using filter paper No. 5C.

<4> A surfactant for use in surface aesthetics enhancing agents for hydraulic compositions, wherein a bleeding aqueous solution conditioned to achieve a concentration of 0.05 mass% of the surfactant, 0.82 mass% of (B) described below, 0.15 mass% of (C) described below, and 0.0033 mass% of (D) described below relative to the bleeding water of the hydraulic composition described below has a dynamic surface tension (σ1) of 55 mN/m or more at a bubble film lifetime of 10 ms and a dynamic surface tension (σ2) of 35 mN/m or less at a bubble film lifetime of 1000 ms as measured by the bubble pressure method (20°C),

[bleeding water of hydraulic composition]
bleeding water of ordinary Portland cement is obtained by adding 4 kg of tap water and 1 kg of ordinary Portland cement to a 5-L polybottle, shaking the polybottle thoroughly, and then allowing the polybottle to stand in a 20°C environment for 24 hours, followed by filtering the supernatant in the polybottle using filter paper No. 5C,
(B): a polycarboxylic acid-based dispersant; a methacrylic acid/methoxy polyethylene glycol (23) monomethacrylate (a polymerization ratio of 75/25 in molar ratio) copolymer (the average number of added moles of ethylene oxide is shown in parentheses),
(C): (c-1) a compound represented by the aforementioned general formula (c); a sodium polyoxyethylene alkyl ether sulfate (in the aforementioned general formula (c), $R^{1c}$ is a hydrocarbon group with an average carbon number of 18, n is 23, m is 0, and M represents a sodium ion), and
(D): a silicone-based defoamer.

<5> A surface aesthetics enhancing agent for hydraulic compositions containing the surfactant for use in surface aesthetics enhancing agents for hydraulic compositions according to <3>.
<6> The surface aesthetics enhancing agent for hydraulic compositions according to any of <1> to <2> or <4> to <5>, wherein the surfactant for use in surface aesthetics enhancing agents for hydraulic compositions according to <3> is a polyoxyethylene alkyl ether having an alkyl group with an average carbon number of 9 or more and 12 or less and an average number of added moles of ethylene oxide of 1 or more and 6 or less.
<7> The surface aesthetics enhancing agent for hydraulic compositions according to any of <1> to <2> or <4> to <6>, wherein the surfactant for use in surface aesthetics enhancing agents for hydraulic compositions according to <3> is one or more selected from polyoxyethylene (2) decyl ether, polyoxyethylene (3) decyl ether, and polyoxyethylene (5) lauryl ether.
<8> A surface aesthetics enhancing agent for hydraulic compositions containing the following (i) and (ii), wherein a content of (ii) is 20 mass% or more and 50 mass% or less relative to the surface aesthetics enhancing agent for hydraulic compositions,

(i): a surface aesthetics enhancing agent for hydraulic compositions having a dynamic surface tension (σ1) of 55 mN/m or more at a bubble film lifetime of 10 ms and a dynamic surface tension (σ2) of 35 mN/m or less at a bubble film lifetime of 1000 ms as measured by the bubble pressure method (20°C), and
(ii): a cement dispersant which is a copolymer containing monomer (1b) represented by the following general formula (1b) and monomer (2b) represented by the following general formula (2b) as constituent monomers,

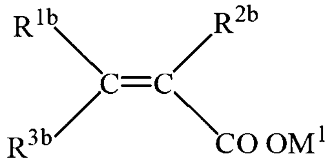

(1b)

wherein $R^{1b}$ is a hydrogen atom, $R^{2b}$ is a methyl group, $R^{3b}$ is a hydrogen atom, and $M^1$ and $M^2$ may be the same or different and each represent a hydrogen atom, an alkali metal, or an alkaline earth metal (1/2 atom), and

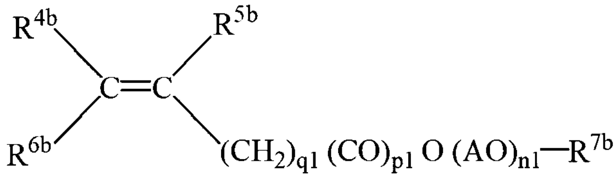

(2b)

wherein $R^{4b}$ is a hydrogen atom, $R^{5b}$ is a methyl group, $R^{6b}$ is a hydrogen atom, $R^{7b}$ is an alkyl group with one carbon, AO is an alkyleneoxy group with 2 carbons, n1 is an average number of added moles of AO and a number of 20 or more and 60 or less, q1 is 0, and p1 is 1.

<9> A surface aesthetics enhancing agent for hydraulic compositions containing the following (iii) and (ii), wherein a content of (ii) is 20 mass% or more and 50 mass% or less relative to the surface aesthetics enhancing agent for hydraulic compositions,

(iii): a surfactant for use in surface aesthetics enhancing agents for hydraulic compositions, wherein an aqueous solution for measurement obtained by adding the surfactant at a concentration of 0.05 mass% to the bleeding water of the hydraulic composition described below has a dynamic surface tension ($\sigma 1$) of 55 mN/m or more at a bubble film lifetime of 10 ms and a dynamic surface tension ($\sigma 2$) of 35 mN/m or less at a bubble film lifetime of 1000 ms as measured by the bubble pressure method (20°C),
[bleeding water of hydraulic composition]
bleeding water of ordinary Portland cement is obtained by adding 4 kg of tap water and 1 kg of ordinary Portland cement to a 5-L polybottle, shaking the polybottle thoroughly, and then allowing the polybottle to stand in a 20°C environment for 24 hours, followed by filtering the supernatant in the polybottle using filter paper No. 5C, and
(ii): a cement dispersant which is a copolymer containing monomer (1b) represented by the following general formula (1b) and monomer (2b) represented by the following general formula (2b) as constituent monomers,

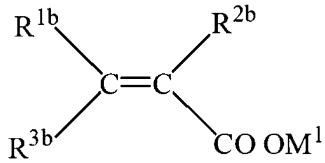

(1b)

wherein $R^{1b}$ is a hydrogen atom, $R^{2b}$ is a methyl group, $R^{3b}$ is a hydrogen atom, and $M^1$ and $M^2$ may be the same or different and each represent a hydrogen atom, an alkali metal, or an alkaline earth metal (1/2 atom), and

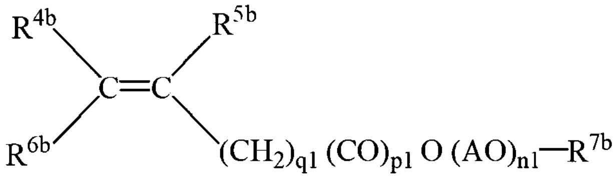

(2b)

wherein $R^{4b}$ is a hydrogen atom, $R^{5b}$ is a methyl group, $R^{6b}$ is a hydrogen atom, $R^{7b}$ is an alkyl group with one carbon, AO is an alkyleneoxy group with 2 carbons, n1 is an average number of added moles of AO and a number of 20 or more and 60 or less, q1 is 0, and p1 is 1.

<10> A surface aesthetics enhancing agent for hydraulic compositions containing the following (iv) and (ii), wherein a content of (ii) is 20 mass% or more and 50 mass% or less relative to the surface aesthetics enhancing agent for hydraulic compositions,

(iv): a surface aesthetics enhancing agent for hydraulic compositions which is one or more selected from polyoxyethylene (2) decyl ether, polyoxyethylene (3) decyl ether, and polyoxyethylene (5) lauryl ether, and
(ii): a cement dispersant which is a copolymer containing monomer (1b) represented by the following general formula (1b) and monomer (2b) represented by the following general formula (2b) as constituent monomers,

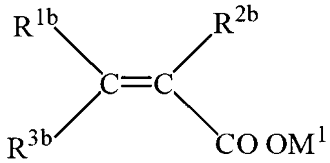

(1b)

wherein $R^{1b}$ is a hydrogen atom, $R^{2b}$ is a methyl group, $R^{3b}$ is a hydrogen atom, and $M^1$ and $M^2$ may be the same or different and each represent a hydrogen atom, an alkali metal, or an alkaline earth metal (1/2 atom), and

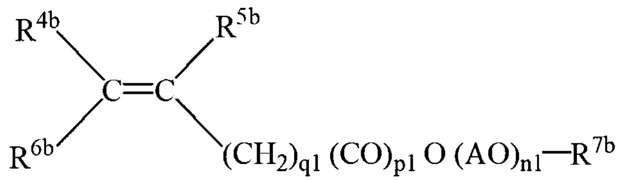

(2b)

wherein $R^{4b}$ is a hydrogen atom, $R^{5b}$ is a methyl group, $R^{6b}$ is a hydrogen atom, $R^{7b}$ is an alkyl group with one carbon, AO is an alkyleneoxy group with 2 carbons, n1 is an average number of added moles of AO and a number of 20 or more and 60 or less, q1 is 0, and p1 is 1.

<11> A surface aesthetics enhancing agent for hydraulic compositions containing the following (i), (ii), (v), and (vi), wherein a content of (ii) is 20 mass% or more and 50 mass% or less relative to the surface aesthetics enhancing agent for hydraulic compositions, a content of (v) is 5 mass% or more and 10 mass% or less relative to the surface aesthetics enhancing agent for hydraulic compositions, and a content of (vi) is 0.01 mass% or more and 0.1 mass% or less relative to the surface aesthetics enhancing agent for hydraulic compositions,

(i): a surface aesthetics enhancing agent for hydraulic compositions having a dynamic surface tension ($\sigma 1$) of 55 mN/m or more at a bubble film lifetime of 10 ms and a dynamic surface tension ($\sigma 2$) of 35 mN/m or less at a bubble film lifetime of 1000 ms as measured by the bubble pressure method (20°C),
(ii): a cement dispersant which is a copolymer containing monomer (1b) represented by the following general formula (1b) and monomer (2b) represented by the following general formula (2b) as constituent monomers,

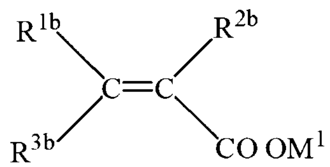

(1b)

wherein $R^{1b}$ is a hydrogen atom, $R^{2b}$ is a methyl group, $R^{3b}$ is a hydrogen atom, and $M^1$ and $M^2$ may be the same or different and each represent a hydrogen atom, an alkali metal, or an alkaline earth metal (1/2 atom), and

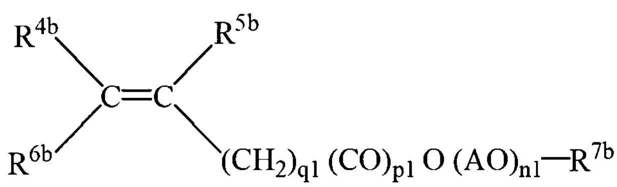

(2b)

wherein $R^{4b}$ is a hydrogen atom, $R^{5b}$ is a methyl group, $R^{6b}$ is a hydrogen atom, $R^{7b}$ is an alkyl group with one carbon, AO is an alkyleneoxy group with 2 carbons, n1 is an average number of added moles of AO and a number of 20 or more and 60 or less, q1 is 0, and p1 is 1,

(v): a product stabilizing agent containing one or more compounds selected from compounds represented by the following general formula (c),

$$R^{1c}\text{-O-}[(EO)_n\cdot(PO)_m]\text{-}SO^3M \qquad (c)$$

wherein $R^{1c}$ is a hydrocarbon group with an average carbon number of 16 or more and 20 or less, EO is an ethyleneoxy group, PO is a propyleneoxy group, n is an average number of added moles of EO and a number of 20 or more and 25 or less, m is an average number of added moles of PO and 0, and M represents a countercation, and
(vi): a silicone-based defoamer.

<12> A surface aesthetics enhancing agent for hydraulic compositions containing the following (iii), (ii), (v), and (vi), wherein a content of (ii) is 20 mass% or more and 50 mass% or less relative to the surface aesthetics enhancing agent for hydraulic compositions, a content of (v) is 5 mass% or more and 10 mass% or less relative to the surface aesthetics enhancing agent for hydraulic compositions, and a content of (vi) is 0.01 mass% or more and 0.1 mass% or less relative to the surface aesthetics enhancing agent for hydraulic compositions,

(iii): a surfactant for use in surface aesthetics enhancing agents for hydraulic compositions, wherein an aqueous solution for measurement obtained by adding the surfactant at a concentration of 0.05 mass% to the bleeding water of the hydraulic composition described below has a dynamic surface tension ($\sigma$1) of 55 mN/m or more at a bubble film lifetime of 10 ms and a dynamic surface tension ($\sigma$2) of 35 mN/m or less at a bubble film lifetime of 1000 ms as measured by the bubble pressure method (20°C),
[bleeding water of hydraulic composition]
bleeding water of ordinary Portland cement is obtained by adding 4 kg of tap water and 1 kg of ordinary Portland cement to a 5-L polybottle, shaking the polybottle thoroughly, and then allowing the polybottle to stand in a 20°C environment for 24 hours, followed by filtering the supernatant in the polybottle using filter paper No. 5C,
(ii): a cement dispersant which is a copolymer containing monomer (1b) represented by the following general formula (1b) and monomer (2b) represented by the following general formula (2b) as constituent monomers,

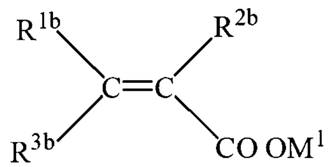
(1b)

wherein $R^{1b}$ is a hydrogen atom, $R^{2b}$ is a methyl group, $R^{3b}$ is a hydrogen atom, and $M^1$ and $M^2$ may be the same or different and each represent a hydrogen atom, an alkali metal, or an alkaline earth metal (1/2 atom), and

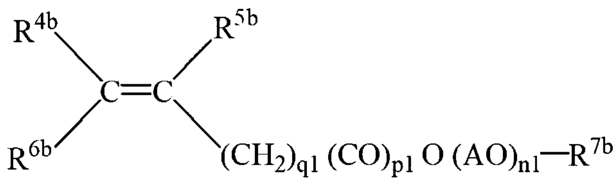
(2b)

wherein $R^{4b}$ is a hydrogen atom, $R^{5b}$ is a methyl group, $R^{6b}$ is a hydrogen atom, $R^{7b}$ is an alkyl group with one carbon, AO is an alkyleneoxy group with 2 carbons, n1 is an average number of added moles of AO and a number of 20 or more and 60 or less, q1 is 0, and p1 is 1,
(v): a product stabilizing agent containing one or more compounds selected from compounds represented by the following general formula (c),

$$R^{1c}\text{-O-}[(EO)_n\cdot(PO)_m]\text{-}SO_3M \qquad (c)$$

wherein $R^{1c}$ is a hydrocarbon group with an average carbon number of 16 or more and 20 or less, EO is an

ethyleneoxy group, PO is a propyleneoxy group, n is an average number of added moles of EO and a number of 20 or more and 25 or less, m is an average number of added moles of PO and 0, and M represents a countercation, and

(vi): a silicone-based defoamer.

<13> A surface aesthetics enhancing agent for hydraulic compositions containing the following (iv), (ii), (v), and (vi), wherein a content of (ii) is 20 mass% or more and 50 mass% or less relative to the surface aesthetics enhancing agent for hydraulic compositions, a content of (v) is 5 mass% or more and 10 mass% or less relative to the surface aesthetics enhancing agent for hydraulic compositions, and a content of (vi) is 0.01 mass% or more and 0.1 mass% or less relative to the surface aesthetics enhancing agent for hydraulic compositions,

(iv): a surface aesthetics enhancing agent for hydraulic compositions which is one or more selected from polyoxyethylene (2) decyl ether, polyoxyethylene (3) decyl ether, and polyoxyethylene (5) lauryl ether,

(ii): a cement dispersant which is a copolymer containing monomer (1b) represented by the following general formula (1b) and monomer (2b) represented by the following general formula (2b) as constituent monomers,

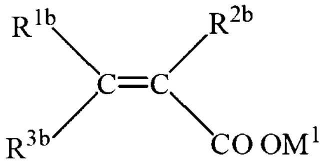

(1b)

wherein $R^{1b}$ is a hydrogen atom, $R^{2b}$ is a methyl group, $R^{3b}$ is a hydrogen atom, and $M^1$ and $M^2$ may be the same or different and each represent a hydrogen atom, an alkali metal, or an alkaline earth metal (1/2 atom), and

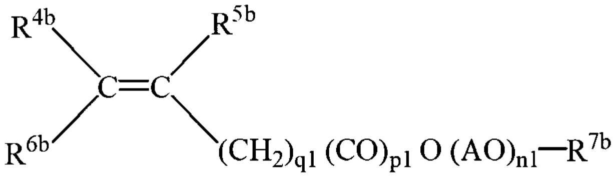

(2b)

wherein $R^{4b}$ is a hydrogen atom, $R^{5b}$ is a methyl group, $R^{6b}$ is a hydrogen atom, $R^{7b}$ is an alkyl group with one carbon, AO is an alkyleneoxy group with 2 carbons, n1 is an average number of added moles of AO and a number of 20 or more and 60 or less, q1 is 0, and p1 is 1,

(v): a product stabilizing agent containing one or more compounds selected from compounds represented by the following general formula (c),

$$R^{1c}\text{-O-}[(EO)_n \cdot (PO)_m]\text{-}SO_3M \qquad (c)$$

wherein $R^{1c}$ is a hydrocarbon group with an average carbon number of 16 or more and 20 or less, EO is an ethyleneoxy group, PO is a propyleneoxy group, n is an average number of added moles of EO and a number of 20 or more and 25 or less, m is an average number of added moles of PO and 0, and M represents a countercation, and

(vi): a silicone-based defoamer.

<14> A hydraulic composition containing the following (i), (ii), (v), and (vi), water, and a hydraulic powder, wherein a content of (i) is 0.01 parts by mass or more and 1 part by mass or less relative to 100 parts by mass of the hydraulic powder, a content of (ii) is 0.2 parts by mass or more and 0.5 parts by mass or less relative to 100 parts by mass of the hydraulic powder, a content of (v) is 0.02 parts by mass or more and 0.1 parts by mass or less relative to 100 parts by mass of the hydraulic powder, and a content of (vi) is 0.0005 parts by mass or more and 0.5 parts by mass or less relative to 100 parts by mass of the hydraulic powder,

(i): a surface aesthetics enhancing agent for hydraulic compositions having a dynamic surface tension ($\sigma$1) of 55 mN/m or more at a bubble film lifetime of 10 ms and a dynamic surface tension ($\sigma$2) of 35 mN/m or less at a bubble film lifetime of 1000 ms as measured by the bubble pressure method (20°C),

(ii): a cement dispersant which is a copolymer containing monomer (1b) represented by the following general formula (1b) and monomer (2b) represented by the following general formula (2b) as constituent monomers,

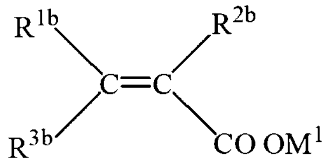

(1b)

wherein $R^{1b}$ is a hydrogen atom, $R^{2b}$ is a methyl group, $R^{3b}$ is a hydrogen atom, and $M^1$ and $M^2$ may be the same or different and each represent a hydrogen atom, an alkali metal, or an alkaline earth metal (1/2 atom), and

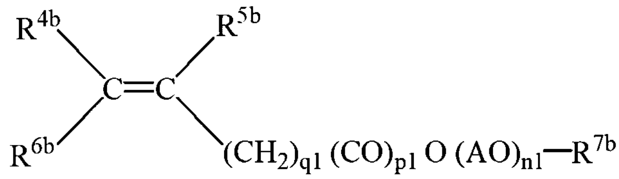

(2b)

wherein $R^{4b}$ is a hydrogen atom, $R^{5b}$ is a methyl group, $R^{6b}$ is a hydrogen atom, $R^{7b}$ is an alkyl group with one carbon, AO is an alkyleneoxy group with 2 carbons, n1 is an average number of added moles of AO and a number of 20 or more and 60 or less, q1 is 0, and p1 is 1,

(v): a product stabilizing agent containing one or more compounds selected from compounds represented by the following general formula (c),

$$R^{1c}\text{-O-}[(EO)_n\cdot(PO)_m]\text{-}SO_3M \qquad (c)$$

wherein $R^{1c}$ is a hydrocarbon group with an average carbon number of 16 or more and 20 or less, EO is an ethyleneoxy group, PO is a propyleneoxy group, n is an average number of added moles of EO and a number of 20 or more and 25 or less, m is an average number of added moles of PO and 0, and M represents a countercation, and
(vi): a silicone-based defoamer.

<15> A hydraulic composition containing the following (iii), (ii), (v), and (vi), water, and a hydraulic powder,

wherein a content of (iii) is 0.01 parts by mass or more and 1 part by mass or less relative to 100 parts by mass of the hydraulic powder, a content of (ii) is 0.2 parts by mass or more and 0.5 parts by mass or less relative to 100 parts by mass of the hydraulic powder, a content of (v) is 0.02 parts by mass or more and 0.1 parts by mass or less relative to 100 parts by mass of the hydraulic powder, and a content of (vi) is 0.0005 parts by mass or more and 0.5 parts by mass or less relative to 100 parts by mass of the hydraulic powder,
(iii): a surfactant for use in surface aesthetics enhancing agents for hydraulic compositions, wherein an aqueous solution for measurement obtained by adding the surfactant at a concentration of 0.05 mass% to the bleeding water of the hydraulic composition described below has a dynamic surface tension ($\sigma$1) of 55 mN/m or more at a bubble film lifetime of 10 ms and a dynamic surface tension ($\sigma$2) of 35 mN/m or less at a bubble film lifetime of 1000 ms as measured by the bubble pressure method (20°C),
[bleeding water of hydraulic composition]
bleeding water of ordinary Portland cement is obtained by adding 4 kg of tap water and 1 kg of ordinary Portland cement to a 5-L polybottle, shaking the polybottle thoroughly, and then allowing the polybottle to stand in a 20°C environment for 24 hours, followed by filtering the supernatant in the polybottle using filter paper No. 5C,
(ii): a cement dispersant which is a copolymer containing monomer (1b) represented by the following general formula (1b) and monomer (2b) represented by the following general formula (2b) as constituent monomers,

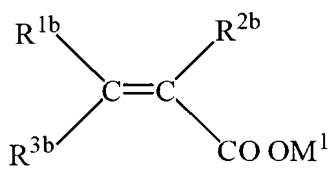

(1b)

wherein $R^{1b}$ is a hydrogen atom, $R^{2b}$ is a methyl group, $R^{3b}$ is a hydrogen atom, and $M^1$ and $M^2$ may be the same or different and each represent a hydrogen atom, an alkali metal, or an alkaline earth metal (1/2 atom), and

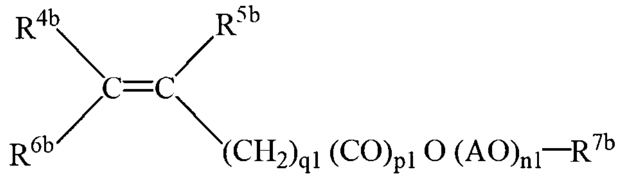

(2b)

wherein $R^{4b}$ is a hydrogen atom, $R^{5b}$ is a methyl group, $R^{6b}$ is a hydrogen atom, $R^{7b}$ is an alkyl group with one carbon, AO is an alkyleneoxy group with 2 carbons, n1 is an average number of added moles of AO and a number of 20 or more and 60 or less, q1 is 0, and p1 is 1,
(v): a product stabilizing agent containing one or more compounds selected from compounds represented by the following general formula (c),

$$R^{1c}\text{-O-}[(EO)_n\cdot(PO)_m]\text{-}SO_3M \qquad (c)$$

wherein $R^{1c}$ is a hydrocarbon group with an average carbon number of 16 or more and 20 or less, EO is an ethyleneoxy group, PO is a propyleneoxy group, n is an average number of added moles of EO and a number of 20 or more and 25 or less, m is an average number of added moles of PO and 0, and M represents a countercation, and
(vi): a silicone-based defoamer.

<16> A hydraulic composition containing the following (iv), (ii), (v), and (vi), water, and a hydraulic powder,

wherein a content of (iv) is 0.01 parts by mass or more and 1 part by mass or less relative to 100 parts by mass of the hydraulic powder, a content of (ii) is 0.2 parts by mass or more and 0.5 parts by mass or less relative to 100 parts by mass of the hydraulic powder, a content of (v) is 0.02 parts by mass or more and 0.1 parts by mass or less relative to 100 parts by mass of the hydraulic powder, and a content of (vi) is 0.0005 parts by mass or more and 0.5 parts by mass or less relative to 100 parts by mass of the hydraulic powder,
(iv): a surface aesthetics enhancing agent for hydraulic compositions which is one or more selected from polyoxyethylene (2) decyl ether, polyoxyethylene (3) decyl ether, and polyoxyethylene (5) lauryl ether,
(ii): a cement dispersant which is a copolymer containing monomer (1b) represented by the following general formula (1b) and monomer (2b) represented by the following general formula (2b) as constituent monomers,

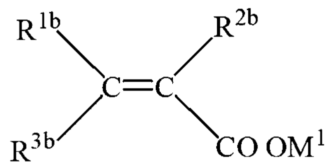

(1b)

wherein $R^{1b}$ is a hydrogen atom, $R^{2b}$ is a methyl group, $R^{3b}$ is a hydrogen atom, and $M^1$ and $M^2$ may be the same or different and each represent a hydrogen atom, an alkali metal, or an alkaline earth metal (1/2 atom), and

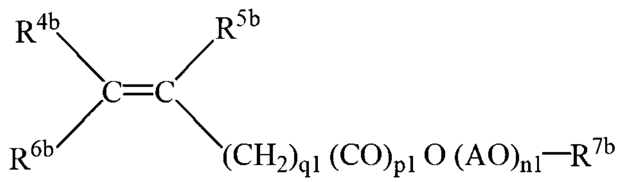

(2b)

wherein $R^{4b}$ is a hydrogen atom, $R^{5b}$ is a methyl group, $R^{6b}$ is a hydrogen atom, $R^{7b}$ is an alkyl group with one carbon, AO is an alkyleneoxy group with 2 carbons, n1 is an average number of added moles of AO and a number of 20 or more and 60 or less, q1 is 0, and p1 is 1,
(v): a product stabilizing agent containing one or more compounds selected from compounds represented by the following general formula (c),

$$R^{1c}\text{-O-[(EO)}_n\cdot\text{(PO)}_m\text{]-SO}_3\text{M} \qquad (c)$$

wherein $R^{1c}$ is a hydrocarbon group with an average carbon number of 16 or more and 20 or less, EO is an ethyleneoxy group, PO is a propyleneoxy group, n is an average number of added moles of EO and a number of 20 or more and 25 or less, m is an average number of added moles of PO and 0, and M represents a countercation, and

(vi): a silicone-based defoamer.

<17> A method for producing a hardened product of a hydraulic composition, the method including a step of mixing a surface aesthetics enhancing agent for hydraulic compositions containing a surfactant, a hydraulic powder, and water to prepare the hydraulic composition, the surfactant having a dynamic surface tension ($\sigma$1) of 55 mN/m or more at a bubble film lifetime of 10 ms and a dynamic surface tension ($\sigma$2) of 35 mN/m or less at a bubble film lifetime of 1000 ms as measured by the bubble pressure method (20°C), a step of filling a mold with the prepared hydraulic composition and hardening the same, and a step of demolding the hardened hydraulic composition.

<18> A method for enhancing the surface aesthetics of a hardened product of a hydraulic composition, the method including adding a surfactant to the hydraulic composition containing a hydraulic powder and water, wherein the surfactant has a dynamic surface tension ($\sigma$1) of 55 mN/m or more at a bubble film lifetime of 10 ms and a dynamic surface tension ($\sigma$2) of 35 mN/m or less at a bubble film lifetime of 1000 ms as measured by the bubble pressure method (20°C).

<19> Use of a surfactant as a surface aesthetics enhancing agent for hydraulic compositions, wherein an aqueous solution for measurement obtained by adding the surfactant at a concentration of 0.05 mass% to the bleeding water of the hydraulic composition described below has a dynamic surface tension ($\sigma$1) of 55 mN/m or more at a bubble film lifetime of 10 ms and a dynamic surface tension ($\sigma$2) of 35 mN/m or less at a bubble film lifetime of 1000 ms as measured by the bubble pressure method (20°C),

[bleeding water of hydraulic composition]
bleeding water of ordinary Portland cement is obtained by adding 4 kg of tap water and 1 kg of ordinary Portland cement to a 5-L polybottle, shaking the polybottle thoroughly, and then allowing the polybottle to stand in a 20°C environment for 24 hours, followed by filtering the supernatant in the polybottle using filter paper No. 5C.

<20> A surface aesthetics enhancing kit for hardened products of hydraulic compositions, the kit including, in combination, aqueous solution $\alpha$ containing the surfactant for use in surface aesthetics enhancing agents for hydraulic compositions according to <4> and aqueous solution $\beta$ containing the following cement dispersant,

[cement dispersant] a copolymer containing monomer (1b) represented by the following general formula (1b) and monomer (2b) represented by the following general formula (2b) as constituent monomers,

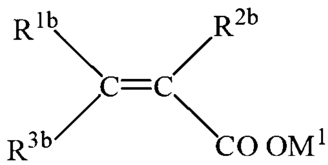

(1b)

wherein

$R^{1b}$, $R^{2b}$, and $R^{3b}$ may be the same or different and each represent a hydrogen atom, a methyl group, or $(CH_2)_rCOOM^2$, and $(CH_2)_rCOOM^2$ may form an anhydride with $COOM^1$ or another $(CH_2)_rCOOM^2$, and in that case, $M^1$ and $M^2$ in those groups are not present,

$M^1$ and $M^2$ may be the same or different and each represent a hydrogen atom, an alkali metal, an alkaline earth metal (1/2 atom), an ammonium group, an alkyl ammonium group, a substituted alkyl ammonium group, an alkyl group, a hydroalkyl group, or an alkenyl group, and

r represents a number of 0 or more and 2 or less, and

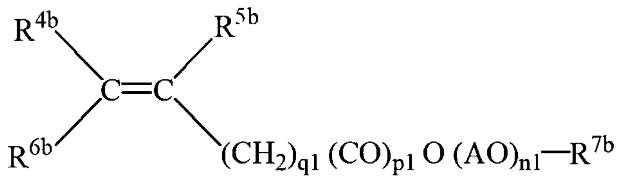

( 2b )

wherein

$R^{4b}$ and $R^{5b}$ may be the same or different and each represent a hydrogen atom or a methyl group,
$R^{6b}$ is a hydrogen atom or $-COO(AO)_{n1}R^{7b}$,
$R^{7b}$ is a hydrogen atom or an alkyl group with 1 or more and 4 or less carbons,
AO is an oxyalkylene group with 2 or more and 4 or less carbons,
n1 is an average number of added moles of AO and a number of 4 or more and 200 or less,
q1 is a number of 0 or more and 2 or less, and
p1 represents 0 or 1.

Examples

Table 1 shows a formula for hydraulic compositions, and Table 2 shows evaluation results. The compounds in the latter are those listed below. The numerals shown in parentheses are the average numbers of added moles of ethylene oxide. Note that the HLB values of component (A) shown below are those measured by Griffin's method.

<Surfactant used in comparative example>

· Palm kernel oil fatty acid diethanolamide: product name "AMINON PK-02S" manufactured by Kao Corporation

<Surfactant used in example>

· Polyoxyethylene (3) decyl ether: a surfactant obtained in production example 1 (an aqueous solution of the surfactant at a concentration of 0.3 mass% had a $\sigma 3$ of 56 mN/m and a $\sigma 4$ of 29 mN/m as measured by the bubble pressure method (20°C)), HLB 9.1
· Polyoxyethylene (5) lauryl ether: a surfactant obtained in production example 2 (an aqueous solution of the surfactant at a concentration of 0.3 mass% had a $\sigma 3$ of 62 mN/m and a $\sigma 4$ of 25 mN/m as measured by the bubble pressure method (20°C)), HLB 10.8
· Polyoxyethylene (2) decyl ether: a surfactant obtained in production example 3 (an aqueous solution of the surfactant at a concentration of 0.3 mass% had a $\sigma 3$ of 60 mN/m and a $\sigma 4$ of 25 mN/m as measured by the bubble pressure method (20°C)), HLB 7.2

[Production example 1] preparation of polyoxyethylene (3) decyl ether

After 1060 g (6.71 mol) of decyl alcohol and 4.36 g (0.067 mol) of potassium hydroxide (net amount 86%) were prepared in a 2-L autoclave with a stirrer, a thermometer, and an EO inlet tube, and nitrogen replacement was performed, dehydration was carried out for 30 minutes at 110°C and at -0.101 MPa. After that, at an initial nitrogen pressure of 0.005 MPa and at 155 ± 5°C, 884 g (20.1 mol) of ethylene oxide was fed to the above mixed reaction product and reacted therewith. Subsequently, 4.095 g (0.068 mol) of acetic acid was added, and neutralization was carried out. The average number of added moles of EO of the obtained product was checked by $^1$H-NMR, and the average number of added moles of EO was 3 mol.

[Production example 2] preparation of polyoxyethylene (2) decyl ether

The same reactions as in production example 1 were carried out except that 590 g (13.4 mol) of ethylene oxide was used in place of 884 g (20.1 mol) of ethylene oxide in production example 1. The average number of added moles of EO of the obtained product was checked by $^1$H-NMR, and the average number of added moles of EO was 2 mol.

[Production example 3] preparation of polyoxyethylene (5) lauryl ether

After 1250 g (6.71 mol) of lauryl alcohol and 4.36 g (0.067 mol) of potassium hydroxide (net amount 86%) were prepared in a 2-L autoclave with a stirrer, a thermometer, and an EO inlet tube, and nitrogen replacement was performed, dehydration was carried out for 30 minutes at 110°C and at -0.101 MPa. After that, at an initial nitrogen pressure of 0.005 MPa and at 155 ± 5°C, 1474 g (33.5 mol) of ethylene oxide was fed to the above mixed reaction product and reacted therewith. Subsequently, 4.095 g (0.068 mol) of acetic acid was added, and neutralization was carried out. The average number of added moles of EO of the obtained product was checked by $^1$H-NMR, and the average number of added moles of EO was 5 mol.

[Table 1]

| W/C | Formulation amount (kg) | | | |
|---|---|---|---|---|
| | W | C | S | G |
| 30% | 4 | 13.3 | 15.5 | 18.2 |

The mass ratio of water to a hydraulic powder (W/C) was 30 parts by mass of water relative to 100 parts by mass of the hydraulic powder. The amount of a fine aggregate was 115 parts by mass relative to 100 parts by mass of the hydraulic powder. Further, the following components were used.

·W: kneading water (tap water (Wakayama city tap water))
·C: ordinary Portland cement (manufactured by TAIHEIYO CEMENT CORPORATION, density 3.16 g/cm$^3$)
· S: fine aggregate (pit sand from Joyo, Kyoto, density 2.50 g/cm$^3$)
· G: coarse aggregate (andesite crushed stone from Nishijima, Hyogo (a mixture of crushed stone with a diameter of 10 to 20 mm and crushed stone with a diameter of 5 to 10 mm at a mass ratio of 1/1), density 2.63 g / cm$^3$)

(1) Preparation of hydraulic composition

Coarse aggregate (G), half of fine aggregate (S), half of cement (C), and the remaining half of fine aggregate (S) under the formulation conditions shown in Table 1 were added in this order to a forced twin-shaft mixer (manufactured by IHI Corporation), and dry-kneaded for 15 seconds. After that, kneading water of the following composition was added, and kneaded for 90 seconds to prepare a hydraulic composition. The kneading water contained a surfactant shown in Table 2 and components (B), (C), and (D) listed below, and was prepared to achieve the following concentrations of the components in the kneading water: the surfactant shown in Table 2 in an amount of 0.05 mass%, component (B) in an amount of 0.82 mass%, component (C) in an amount of 0.15 mass% (the mass ratio of component (c-2) to component (c-1) in component (C), (c-2)/(c-1), was 0.125), and component (D) in an amount of 0.0033 mass%.

<Optional component used in (1) preparation of hydraulic composition>

· (B) a polycarboxylic acid-based dispersant; a methacrylic acid/methoxy polyethylene glycol (23) monomethacrylate copolymer (the average number of added moles of ethylene oxide is shown in parentheses)
· (C) (c-1) a compound represented by the aforementioned general formula (c); a sodium polyoxyethylene alkyl ether sulfate (in the aforementioned general formula (c), $R^{1c}$ is a hydrocarbon group with an average carbon number of 18, n is 23, m is 0, and M represents a sodium ion), and (c-2); phenoxy ethanol manufactured by The Dow Chemical Company
· (D) defoamer; a silicone-based defoamer (ANTIFOAM E-20 manufactured by Kao Corporation, HLB was not able to be calculated by Griffin's method due to unknown structure)

(2) Measurement of dynamic surface tension

(2-1) Measurement of dynamic surface tension of surfactant

The dynamic surface tensions σ3 and σ4 of an aqueous solution of each surfactant at a concentration of 0.3 mass% were measured by the bubble pressure method (20°C, capillary diameter: 0.2 to 0.3 mm, measurement time period: 10 ms to 10000 ms) using a bubble pressure dynamic surface tensiometer manufactured by KRÜSS Scientific

(product name: "BP100").

(2-2) Measurement of dynamic surface tension of surface aesthetics enhancing agent for hydraulic compositions

Bleeding water of ordinary Portland cement (manufactured by TAIHEIYO CEMENT CORPORATION, density 3.16 g/cm$^3$) was obtained by adding 4 kg of tap water and 1 kg of the ordinary Portland cement to a polybottle with a capacity of 5 L, shaking the polybottle thoroughly, and then allowing the polybottle to stand in a 20°C environment for 24 hours, followed by filtering the supernatant in the polybottle using filter paper No. 5C. The amounts of surfactant (A) shown in Table 2 and (B), (C), and (D) listed below relative to the obtained bleeding water were conditioned respectively to 0.05 mass%, 0.82 mass%, 0.15 mass%, and 0.0033 mass%. The dynamic surface tensions of the obtained aqueous solution were measured by the method described in (2-1). The results are shown in Table 2.

<Optional component contained in surface aesthetics enhancing agent for hydraulic compositions in (2-2)>

(B): a polycarboxylic acid-based dispersant; a methacrylic acid/methoxy polyethylene glycol (23) monomethacrylate (a polymerization ratio of 75/25 in molar ratio) copolymer (the average number of added moles of oxyethylene groups is shown in parentheses)
(C): (c-1) a compound represented by the aforementioned general formula (c); a sodium polyoxyethylene alkyl ether sulfate (in the aforementioned general formula (c), $R^{1c}$ is a hydrocarbon group with an average carbon number of 18, n is 23, m is 0, and M represents a sodium ion)
(D): a silicone-based defoamer (ANTIFOAM E-20 manufactured by Kao Corporation)

(3) Measurement of amount of bubble traces on hardened product of hydraulic composition

(3-1) Preparation of hardened product of hydraulic composition

The above obtained hydraulic composition was filled into a 0.1 m × 0.2 m × 0.5 m steel mold from its 0.2 m × 0.5 m face without vibration, and hardened by curing at 20°C. 24 hours after the preparation of the hydraulic composition, the hardened product of the hardened hydraulic composition was demolded from the mold. Note that an oil-based straight-type mold release agent was applied to the inside of the mold.

(3-2) Measurement of amount of bubble traces on hardened product of hydraulic composition

The surface of one face (0.2 m × 0.5 m face) of the demolded hardened product was scrubbed with a plastic brush to remove a thin skin, and the data of images of the surface photographed with a smartphone was converted into two colors using Image J (black for areas with bubble traces and white for the rest). The ratio of the area of bubble traces occupying the surface of the hardened product was calculated from the ratio of each color using the following formula, and defined as the amount of bubble traces (area%). The results are shown in Table 2.

Amount of bubble traces (area%) = [area of bubble traces (m$^2$) / 0.2 m × 0.5 m face (m$^2$) on the pouring side] × 100

[Table 2]

| | | Surface aesthetics enhancing agent for hydraulic compositions | | | Amount of bubble traces on hardened product of hydraulic composition (area%)*1 |
|---|---|---|---|---|---|
| | | (A) Surfactant | σ1 | σ2 | |
| Comparative example | 1 | - | - | - | 7.2 |
| | 2 | Palm kernel oil fatty acid diethanolamide | 66 | 36 | 1.4 |
| Example | 1 | Polyoxyethylene (5) lauryl ether | 66 | 31 | 0.7 |
| | 2 | Polyoxyethylene (2) decyl ether | 62 | 29 | 0.6 |
| | 3 | Polyoxyethylene (3) decyl ether | 60 | 33 | 1.1 |

*1: the ratio of the area of bubble traces on the surface of the hardened product of the hydraulic composition with one face (0.2 m × 0.5 m face) of the hardened product as 100 area%

From the results of examples 1 to 3, it can be confirmed that there were fewer bubble traces, i.e., less than 1% of bubble traces, on the surface of the hardened products of the hydraulic compositions in which the surface aesthetics enhancing agent for hydraulic compositions of the present invention was used.

## Claims

1. A surface aesthetics enhancing agent for hydraulic compositions, wherein the agent has a dynamic surface tension (σ1) of 55 mN/m or more at a bubble film lifetime of 10 ms and a dynamic surface tension (σ2) of 35 mN/m or less at a bubble film lifetime of 1000 ms as measured by the bubble pressure method (20°C).

2. A surfactant for use in surface aesthetics enhancing agents for hydraulic compositions,

   wherein an aqueous solution for measurement obtained by adding the surfactant at a concentration of 0.05 mass% to the bleeding water of the hydraulic composition described below has a dynamic surface tension (σ1) of 55 mN/m or more at a bubble film lifetime of 10 ms and a dynamic surface tension (σ2) of 35 mN/m or less at a bubble film lifetime of 1000 ms as measured by the bubble pressure method (20°C),
   [bleeding water of hydraulic composition] bleeding water of ordinary Portland cement is obtained by adding 4 kg of tap water and 1 kg of ordinary Portland cement to a 5-L polybottle, shaking the polybottle thoroughly, and then allowing the polybottle to stand in a 20°C environment for 24 hours, followed by filtering the supernatant in the polybottle using filter paper No. 5C.

3. A surface aesthetics enhancing agent for hydraulic compositions comprising the surfactant for use in surface aesthetics enhancing agents for hydraulic compositions according to claim 2.

4. The surface aesthetics enhancing agent for hydraulic compositions according to any one of claim 1 or 3, wherein the surfactant for use in surface aesthetics enhancing agents for hydraulic compositions according to claim 2 is a polyoxyethylene alkyl ether having an alkyl group with an average carbon number of 9 or more and 12 or less and an average number of added moles of ethylene oxide of 1 or more and 6 or less.

**5.** The surface aesthetics enhancing agent for hydraulic compositions according to any one of claims 1, 3, and 4, wherein the surfactant for use in surface aesthetics enhancing agents for hydraulic compositions according to claim 2 is one or more selected from polyoxyethylene (5) lauryl ether, polyoxyethylene (2) decyl ether, and polyoxyethylene (3) decyl ether.

**6.** The surface aesthetics enhancing agent for hydraulic compositions according to any one of claims 1 and 3 to 5, further comprising a cement dispersant.

**7.** The surface aesthetics enhancing agent for hydraulic compositions according to claim 6, wherein the cement dispersant comprises a copolymer containing a monomer (1b) represented by the following general formula (1b) and a monomer (2b) represented by the following general formula (2b) as constituent monomers,

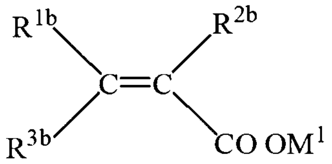

(1b)

wherein

$R^{1b}$, $R^{2b}$, and $R^{3b}$ may be the same or different and each represent a hydrogen atom, a methyl group, or $(CH_2)_rCOOM^2$, and $(CH_2)_rCOOM^2$ may form an anhydride with $COOM^1$ or another $(CH_2)_rCOOM^2$, and in that case, $M^1$ and $M^2$ in those groups are not present,
$M^1$ and $M^2$ may be the same or different and each represent a hydrogen atom, an alkali metal, an alkaline earth metal (1/2 atom), an ammonium group, an alkyl ammonium group, a substituted alkyl ammonium group, an alkyl group, a hydroalkyl group, or an alkenyl group, and
r represents a number of 0 or more and 2 or less, and

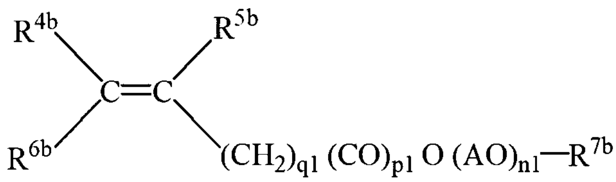

(2b)

wherein

$R^{4b}$ and $R^{5b}$ may be the same or different and each represent a hydrogen atom or a methyl group,
$R^{6b}$ is a hydrogen atom or $-COO(AO)_{n1}R^{7b}$,
$R^{7b}$ is a hydrogen atom or an alkyl group with 1 or more and 4 or less carbons,
AO is an alkyleneoxy group with 2 or more and 4 or less carbons,
n1 is an average number of added moles of AO and a number of 4 or more and 200 or less,
q1 is a number of 0 or more and 2 or less, and
p1 represents 0 or 1.

**8.** The surface aesthetics enhancing agent for hydraulic compositions according to any one of claims 1 and 3 to 7, further comprising one or more compounds selected from compounds represented by the following general formula (c):

$$R^{1c}\text{-O-}[(EO)_n\cdot(PO)_m]\text{-}SO_3M \qquad (c)$$

wherein $R^{1c}$ is a hydrocarbon group with an average carbon number of 4 or more and 20 or less, EO is an oxyethylene group, PO is an oxypropylene group, n is an average number of added moles of EO and a number of 1 or more and 50 or less, m is an average number of added moles of PO and a number of 0 or more and 10 or less, EO and PO may be bonded in blocks or at random, and M represents a countercation.

**9.** The surface aesthetics enhancing agent according to any one of claims 1 and 3 to 8, further comprising a defoamer.

**10.** A hydraulic composition comprising the surface aesthetics enhancing agent according to any one of claims 1 and 3 to

9, a hydraulic powder, and water.

**11.** The hydraulic composition according to claim 10, wherein an addition amount of the surfactant according to claim 2 is 0.005 parts by mass or more and 1.0 parts by mass or less relative to 100 parts by mass of the hydraulic powder.

**12.** A method for producing a hardened product of a hydraulic composition, the method comprising a step of mixing a surface aesthetics enhancing agent for hydraulic compositions, a hydraulic powder, and water to prepare the hydraulic composition, the agent having a dynamic surface tension ($\sigma 1$) of 55 mN/m or more at a bubble film lifetime of 10 ms and a dynamic surface tension ($\sigma 2$) of 35 mN/m or less at a bubble film lifetime of 1000 ms as measured by the bubble pressure method (20°C), a step of filling a mold with the prepared hydraulic composition and hardening the same, and a step of demolding the hardened hydraulic composition.

**13.** A method for enhancing the surface aesthetics of a hardened product of a hydraulic composition, the method comprising adding a surfactant to the hydraulic composition containing a hydraulic powder and water, wherein the surfactant has a dynamic surface tension ($\sigma 1$) of 55 mN/m or more at a bubble film lifetime of 10 ms and a dynamic surface tension ($\sigma 2$) of 35 mN/m or less at a bubble film lifetime of 1000 ms as measured by the bubble pressure method (20°C).

**14.** Use of a surfactant as a surface aesthetics enhancing agent for hydraulic compositions, wherein an aqueous solution for measurement obtained by adding the surfactant at a concentration of 0.05 mass% to the bleeding water of the hydraulic composition described below has a dynamic surface tension ($\sigma 1$) of 55 mN/m or more at a bubble film lifetime of 10 ms and a dynamic surface tension ($\sigma 2$) of 35 mN/m or less at a bubble film lifetime of 1000 ms as measured by the bubble pressure method (20°C),

[bleeding water of hydraulic composition]
bleeding water of ordinary Portland cement is obtained by adding 4 kg of tap water and 1 kg of ordinary Portland cement to a 5-L polybottle, shaking the polybottle thoroughly, and then allowing the polybottle to stand in a 20°C environment for 24 hours, followed by filtering the supernatant in the polybottle using filter paper No. 5C.

**15.** A surface aesthetics enhancing kit for hardened products of hydraulic compositions, the kit comprising, in combination, an aqueous solution $\alpha$ containing the surfactant for use in surface aesthetics enhancing agents for hydraulic compositions according to claim 2 and an aqueous solution $\beta$ containing the following cement dispersant,

[cement dispersant] a copolymer containing a monomer (1b) represented by the following general formula (1b) and a monomer (2b) represented by the following general formula (2b) as constituent monomers,

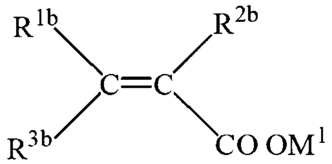

(1b)

wherein

$R^{1b}$, $R^{2b}$, and $R^{3b}$ may be the same or different and each represent a hydrogen atom, a methyl group, or $(CH_2)_rCOOM^2$, and $(CH_2)_rCOOM^2$ may form an anhydride with $COOM^1$ or another $(CH_2)_rCOOM^2$, and in that case, $M^1$ and $M^2$ in those groups are not present,
$M^1$ and $M^2$ may be the same or different and each represent a hydrogen atom, an alkali metal, an alkaline earth metal (1/2 atom), an ammonium group, an alkyl ammonium group, a substituted alkyl ammonium group, an alkyl group, a hydroalkyl group, or an alkenyl group, and
r represents a number of 0 or more and 2 or less, and

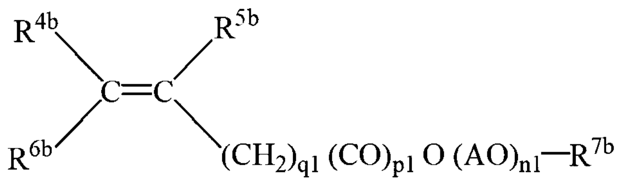

(2b)

wherein

$R^{4b}$ and $R^{5b}$ may be the same or different and each represent a hydrogen atom or a methyl group,
$R^{6b}$ is a hydrogen atom or -COO $(AO)_{n1}R^{7b}$,
$R^{7b}$ is a hydrogen atom or an alkyl group with 1 or more and 4 or less carbons,
AO is an oxyalkylene group with 2 or more and 4 or less carbons,
n1 is an average number of added moles of AO and a number of 4 or more and 200 or less,
q1 is a number of 0 or more and 2 or less, and
p1 represents 0 or 1.

[FIG. 1]

(a)

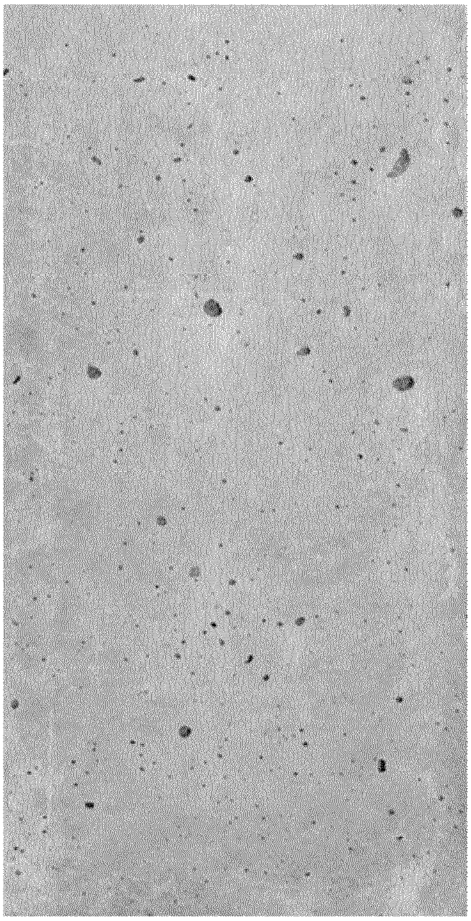

(b)

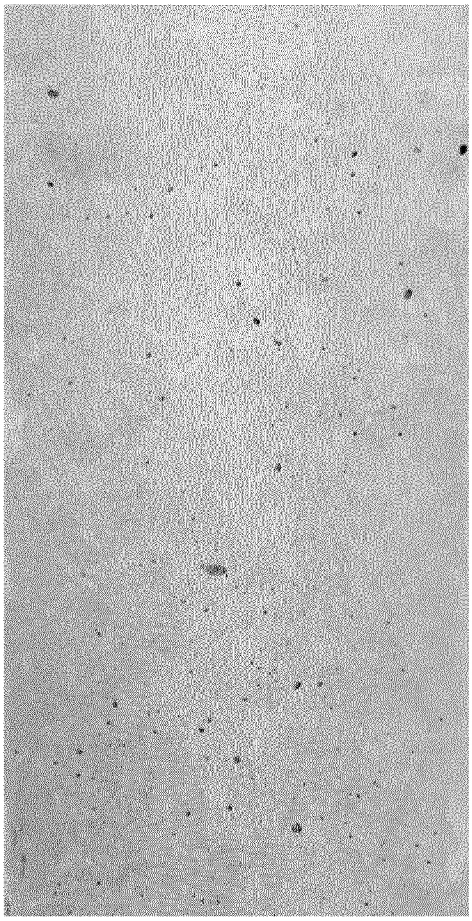

[FIG. 2]

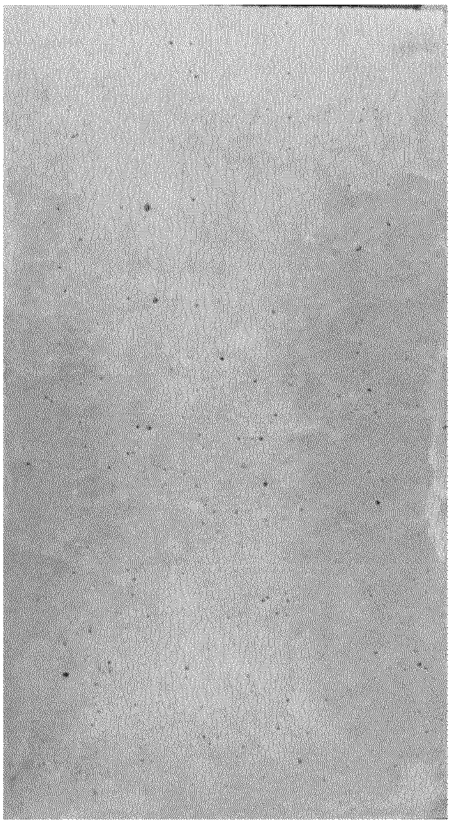

**INTERNATIONAL SEARCH REPORT**

International application No.
**PCT/JP2024/004942**

**A. CLASSIFICATION OF SUBJECT MATTER**

***C04B 24/02***(2006.01)i; ***C04B 24/16***(2006.01)i; ***C04B 24/26***(2006.01)i; ***C04B 28/02***(2006.01)i; ***G01N 13/02***(2006.01)i
FI: C04B24/02; C04B24/16; C04B24/26 E; C04B24/26 F; C04B28/02; G01N13/02

According to International Patent Classification (IPC) or to both national classification and IPC

**B. FIELDS SEARCHED**

Minimum documentation searched (classification system followed by classification symbols)

C04B7/00-28/36; G01N13/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2018/199055 A1 (KAO CORPORATION) 01 November 2018 (2018-11-01) claims 23-48, paragraphs [0001], [0022]-[0168] | 1-15 |
| A | JP 2022-176809 A (TOHO CHEMICAL INDUSTRY CO., LTD.) 30 November 2022 (2022-11-30) entire text | 1-15 |
| A | JP 2022-134514 A (KAO CORPORATION) 15 September 2022 (2022-09-15) entire text | 1-15 |
| A | JP 2018-130957 A (KAO CORPORATION) 23 August 2018 (2018-08-23) entire text | 1-15 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **02 April 2024** | **23 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/004942**

| Patent document cited in search report | Publication date (day/month/year) | Patent family member(s) | Publication date (day/month/year) |
|---|---|---|---|
| WO 2018/199055 A1 | 01 November 2018 | JP 2018-184339 A | |
| JP 2022-176809 A | 30 November 2022 | (Family: none) | |
| JP 2022-134514 A | 15 September 2022 | (Family: none) | |
| JP 2018-130957 A | 23 August 2018 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*


### Patent documents cited in the description

- JP 2019196282 A
- JP 2019026506 A
- JP 2018130957 A
- JP H812397 A

### Non-patent literature cited in the description

- Concrete Handbook. Gijutsu Shoin Company, Limited, 10 June 1998
- *The Japan Society of Civil Engineers Standard Specification*, 2023